Europäisches Patentamt

(19) European Patent Office

Office européen des brevets

(11) **EP 0 944 187 A2**

(12) **EUROPEAN PATENT APPLICATION**

(43) Date of publication:
22.09.1999 Bulletin 1999/38

(51) Int. Cl.$^6$: **H04B 10/155**

(21) Application number: 99101793.0

(22) Date of filing: 16.02.1999

(84) Designated Contracting States:
AT BE CH CY DE DK ES FI FR GB GR IE IT LI LU
MC NL PT SE
Designated Extension States:
AL LT LV MK RO SI

(30) Priority: 20.03.1998 JP 7179898

(71) Applicant: FUJITSU LIMITED
Kawasaki-shi, Kanagawa 211-8588 (JP)

(72) Inventors:
• Miki, Makoto,
Fujitsu Hokkaido Digital Technol.Ltd
Sapporo-shi, Hokaiddo 060-0807 (JP)

• Yamamoto, Satoshi,Fujitsu Hokkaido
Digit.Techn.Ltd
Fukuoka-shi, Fukuoka 812-0011 (JP)
• Chiba, Takaya,
Fujitsu Hokkaido Digital Techn. Ltd
Sapporo-shi, Hokkaido 060-0807 (JP)
• Matsuyama, Toru,
Fujitsu Hokkaido Digit.Techn. Ltd
Sapporo-shi, Hokkaido 060-0807 (JP)

(74) Representative: HOFFMANN - EITLE
Patent- und Rechtsanwälte
Arabellastrasse 4
81925 München (DE)

(54) **Light emitting element control unit**

(57) The present invention discloses a light emitting element control unit including a data detecting section (5) to detect a data signal for a predetermined time for a burst transmission period, a reference signal generating section (6) to generate a reference signal, an optical power control section (7) to compare a monitor signal detected from optical output from a light emitting element (3) with the reference signal so as to output a light emitting element driving and controlling signal for a control of a light emitting element driving section (2) depending upon the result of comparison and output from the data detecting section (5), a holding section (8) to hold output from the optical power control section (7), and a switching section (9) switched depending upon a data signal, thereby feeding any one of output from the optical power control section (7) and output from the holding section (8) to the light emitting element driving section (2). It is an object to enable a rapid rise of optical output in a first burst head section, and stably feed second or later burst optical output irrespective of a holding time.

FIG. 1

EP 0 944 187 A2

**Description**

BACKGROUND OF THE INVENTION

(1) Field of the Invention

The present invention relates to a light emitting element control unit used to make an optical output control of a light emitting element.

(2) Description of the Related Art

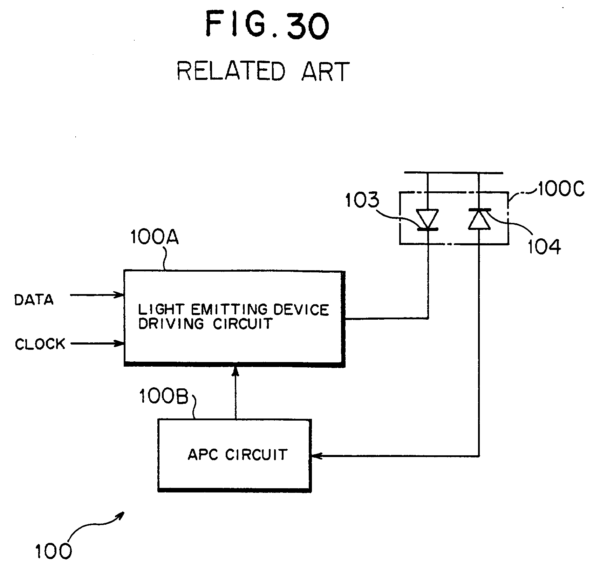

Fig. 30 is a diagram showing a configuration of a typical light emitting element control unit. As shown in Fig. 30, a light emitting element control unit 100 includes a light emitting element driving circuit 100A, a light emitting element 103, a light receiving element 104, and an APC circuit 100B, and is applied to, in particular, a burst transmission mode used for an optical subscriber network.

Here, the light emitting element 103 emits an optical signal depending upon an input data signal, and includes, for example, a laser diode (LD) to convert an electrical signal into an optical signal so as to feed its output to an optical transmission line (not shown) and output monitor light.

Further, the light receiving element 104 receives the monitor light outputted from the light emitting element 103, and includes, for example, a photo diode (PD) to again convert the monitor light into the electrical signal. Moreover, the above light emitting element 103 and light receiving element 104 function as a light emitting section 100C.

Also, the light emitting element driving circuit 100A drives optical output from the light emitting element 103 depending upon an input data signal, and the APC (Automatic Power Control) circuit 100B controls the light emitting element driving circuit 100A depending upon the monitor signal received in the light receiving element 104.

In general, when a constant driving current is fed from the light emitting element driving circuit 100A, the above light emitting element 103 provides reduced optical output at high temperatures or increased optical output at low temperatures. Hence, in LSI (Large Scale Integration), the APC function is added to control the driving current sent to the light emitting element 103 so as to provide constant optical output at all times.

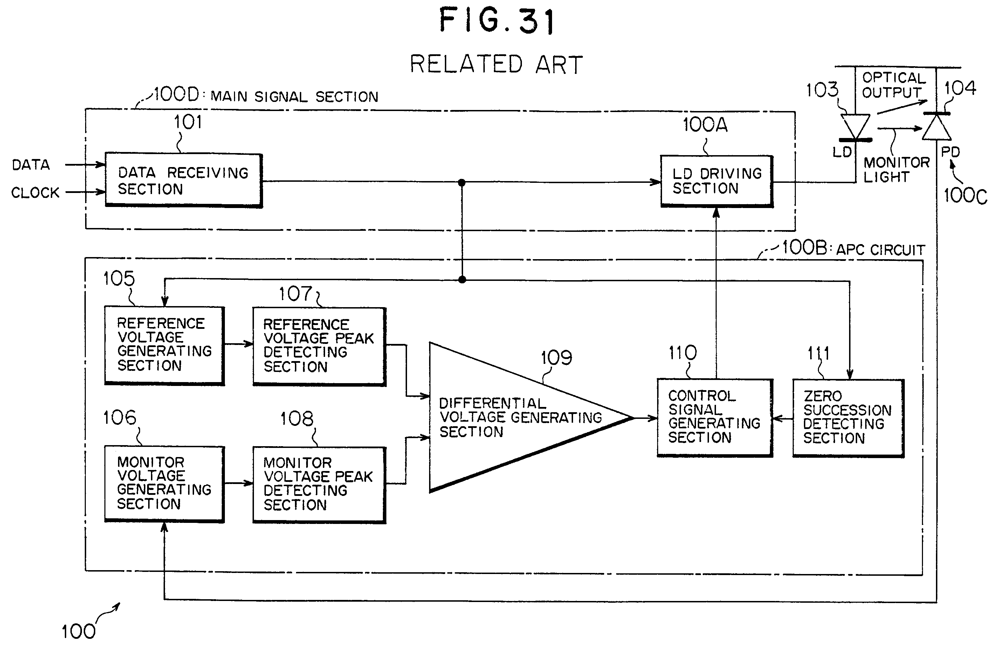

Fig. 31 is a block diagram showing an internal configuration of the above light emitting element control unit. The light emitting element control unit 100 shown in Fig. 31 includes a data receiving section 101, the LD driving section 100A, the light emitting element 103, the light receiving element 104, a reference voltage generating section 105, a monitor voltage generating section 106, a reference voltage peak detecting section 107, a monitor voltage peak detecting section 108, a differential voltage generating section 109, a control signal generating section 110, and a zero succession detecting section 111. Moreover, reference numerals described above are used for the same components, and descriptions thereof are omitted.

Here, the data receiving section 101 receives input data and a clock. The data receiving section 101 and the above light emitting element driving circuit (LD driving section) 100A form a main signal section 100D.

Also, the reference voltage generating section 105 generates a reference voltage signal for an optical output control depending upon output from the data receiving section 101. The monitor voltage generating section 106 converts an output signal from the light receiving element 104, i.e., a current signal into a voltage signal, thereby generating a monitor voltage signal for the optical output control.

Further, the reference voltage peak detecting section 107 detects a peak value of an output voltage of the above reference voltage generating section 105. The monitor voltage peak detecting section 108 detects a peak value of an output voltage of the above monitor voltage generating section 106. The differential voltage generating section 109 generates a voltage according to a difference between the output signals from the above reference voltage peak detecting section 107 and the monitor voltage peak detecting section 108.

In addition, the control signal generating section 110 generates an optical output control signal for the optical output control depending upon output of the differential voltage generating section 109. The zero succession detecting section 111 detects a "zero succession" in input data, and prevents the optical output control signal from increasing while the data being "0". Specifically, the zero succession detecting section 111 outputs to the control signal generating section 110 "1" when the data receiving section 101 receives data "1" or "0" when receiving data "0".

That is, the control signal generating section 110 outputs a desired light emitting element driving and controlling signal to the LD driving section 100A depending upon the output from the above zero succession detecting section 111. Moreover, the APC circuit 100B (see Fig. 31) is formed by the reference voltage generating section 105, the monitor voltage generating section 106, the reference voltage peak detecting section 107, the monitor voltage peak detecting section 108, the differential voltage generating section 109, the control signal generating section 110, and the zero succession detecting section 111, all of which are described above.

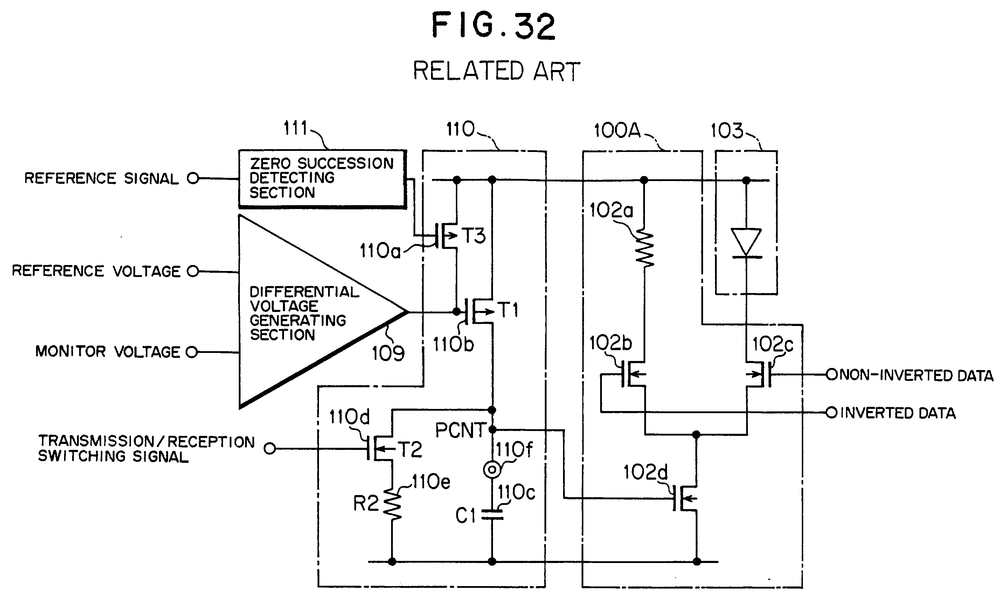

Meanwhile, as shown in, for example, Fig. 32, the above control signal generating section 110 includes field effect transistors (T3, T1) 110a, 110b, a capacitor (C1) 110c, a field effect transistor (T2) 110d, and a resistor (R2) 110e.

Here, the field effect transistor 110b conducts current according to output of the differential voltage generating section 109. The capacitor 110c is connected to the field effect transistor 110b through a connector 110f, and is charged with a current of the field effect transistor 110b. That is, a control signal is generated by charging the capacitor 110c with the current from the field effect transistor 110b.

Further, the field effect transistor 110d is put in a conducting state when a transmit signal is ON, and the resistor 110e discharges excessive electrical charges with which the capacitor 110c is charged when the transmit signal is ON.

Also, depending upon the output signal from the zero succession detecting section 111, the field effect transistor 110a is turned ON when the data is "0". In response to the ON state of the field effect transistor 110a, the field effect transistor 110b is turned OFF so as not to charge the capacitor 110c with the current.

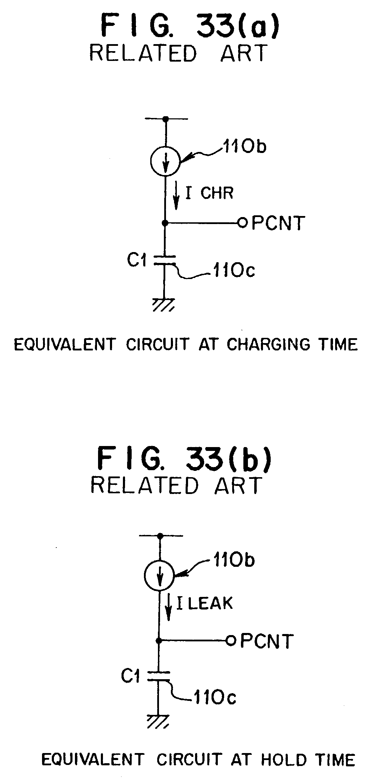

Specifically, at a charging time, as shown in, for example, Fig. 33(a), the current flows from the field effect transistor 110b so that the capacitor 110c is charged with the current. Moreover, a relational expression with respect to the charging time can be written as the following expression (1):

$$t(chr) = C_1 \times \Delta V_{PCNT}/I(chr) \qquad (1)$$

where　　t(chr); Time required for charging
　　　　　I(chr); Charging current fed by the field effect transistor 110b
　　　　　$\Delta V_{PCNT}$; Amount of change in voltage at terminal PCNT

Further, at a hold time, as shown in Fig. 33(b), a leak current flows from the field effect transistor 110b so that the capacitor 110c is similarly charged therewith. Moreover, a relational expression with respect to the hold time can be written as the following expression (2):

$$t(hold) = C_1 \times \Delta V_{PCNT}/I(leak) \qquad (2)$$

where　　t(hold); Hold time
　　　　　I(leak); Leak current fed from the field effect transistor T1
　　　　　$\Delta V_{PCNT}$; Amount of change in voltage at terminal PCNT

In addition, the above LD driving section 100A includes, as shown in Fig. 32, a resistor 102a, and field effect transistors 102b, 102c, and 102d in order to feed a driving current signal to the light emitting element 103 depending upon the APC control signal from the control signal generating section 110 and data (non-inverted data, inverted data) from the data receiving section 101.

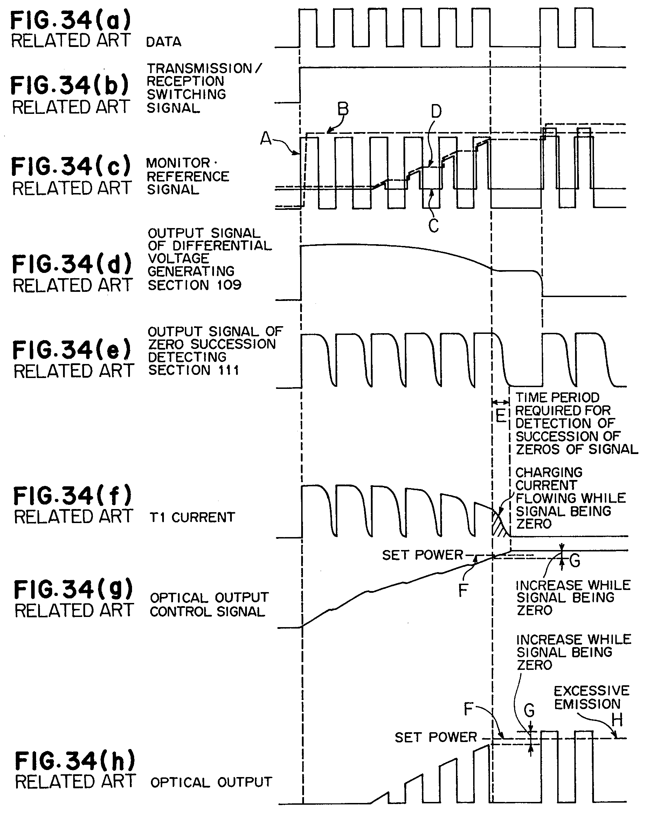

A description will now be given of an operation of the above light emitting element control unit 100 with reference to Fig. 34(a)-34(h).

First, when first burst data is inputted as shown in Fig. 34(a), in the APC circuit 100B, the reference voltage generating section 105 generates a reference signal (see reference mark A), and the reference voltage peak detecting section 107 detects a peak value (see reference mark B) of the reference signal as shown in Fig. 34(c).

Accordingly, a similar operation can be observed on the monitor side. As shown in Fig. 34(c), the monitor voltage generating section 106 generates a monitor voltage signal (see reference mark C), and the monitor voltage peak detecting section 108 detects a peak value (see reference mark D) of the monitor voltage signal. However, since the light emitting element 103 does not emit light at an initial rise time of the APC, a difference in voltage signal is caused between the monitor side and the reference side as shown in Fig. 34(c).

That is, the differential voltage generating section 109 generates a signal corresponding to the difference. As shown in, for example, Fig. 34(d), the differential voltage generating section 109 outputs a high differential voltage immediately after input of data. The differential voltage gradually decreases with the emission of the light emitting element 103.

At this point in time, the zero succession detecting section 111 is detecting "1" or "0" in response to input data as shown in Fig. 34(e), thereby performing switching of ON/OFF states of the field effect transistor 110a of the control signal generating section 110 in order to control output of a current from the field effect transistor 110b.

That is, as shown in, for example, Fig. 34(f), depending upon timing (when the data is "1") from the zero succession detecting section 111, the field effect transistor 110b receives the output from the differential voltage generating section 109 and passes the output as T1 current through the capacitor 110c for charging. Subsequently, with the charging of the capacitor 110c, the optical output control signal is increased [see Fig. 34(g)], and optical output from the light emitting element 103 is increased [see Fig. 34(h)].

As stated above, in the above light emitting element control unit 100, when the input data is "0", the zero succession detecting section 111 turns OFF the field effect transistor 110b, thereby preventing the optical output control signal from increasing while the data being "0".

However, there are the following problems in the above light emitting element control unit 100.

First, in the control signal generating section 110, the capacitor 110c has a large capacity to hold a long burst. Therefore, the above charging time of the T1 current is required [see Expression (1)], resulting in a problem of a delayed initial rise time of a first burst head section in a data signal by the control signal generating section 110.

Thus, there is a possible method in that the T1 current is increased to provide an earlier initial rise time. In this case, it is necessary to increase the field effect transistor 110b in transistor size itself, resulting in a larger leak current of the field effect transistor 110b during a burst non-transmission period.

As shown in, for example, Fig. 34(e), a certain time period (see reference mark E) is required for the zero succession detecting section 111 to successively detect "0s". Consequently, during the time period, electrical charges flow from the field effect transistor 110b so that the capacitor 110c is charged therewith.

That is, as shown in Fig. 34(g), until the zero succession detecting section 111 detects a succession of "0s", the optical output control signal slightly exceeds a set power (see reference mark F) (see reference mark G). Hence, in the next burst transmission signal, there is caused a variation in optical power such as excessive emission [see reference mark H in Fig. 34(h)].

Further, in order to avoid the above excessive emission, there is another possible method in that the zero succession detecting section 111 stops the charging while the data being "0". In this case, the initial rise time is delayed. Hence, in order to provide an earlier initial rise time, a response (a time point when "0s" are successively detected) of the zero succession detecting section 111 may be delayed. This may, however, cause the excessive emission at the initial rise time under some phase conditions as in the above discussion.

As described above, the respective trade-offs are established between the initial rise time of the first burst head section and the excessive emission from the light emitting element 103, and between the initial rise time and the burst hold time. Thus, in the related art, the rise time is limited to within 2.8 μ sec, the excessive emission is less than or equal to 0.8 dB, and the burst hold time is 1 msec. In recent years, a system must meet specifications such as burst hold time of 100 msec or more. However, it is impossible to realize such a system by using the existing circuit.

SUMMARY OF THE INVENTION

In view of the antinomic problems, it is an object of the present invention to provide a light emitting element control unit in which, at a burst transmission time of a data signal, a light emitting element driving and controlling signal for a power control of a light emitting element is held at a time of the power control, thereby enabling a rapid rise of optical output in a first burst head section, and a stable supply of second or later burst optical output irrespective of a holding time.

Hence, according to the present invention, there is provided a light emitting element control unit having a light emitting element driving section to drive according to an input data signal a light emitting element for emitting an optical signal. The light emitting element control unit includes a data detecting section to detect a data signal for a predetermined time interval for a burst transmission period, a reference signal generating section to generate a reference signal, an optical power control section to compare a monitor signal detected from optical output from the light emitting element with the reference signal generated in the reference signal generating section so as to output a light emitting element driving and controlling signal for a control of the light emitting element driving section depending upon the result of comparison and output from the data detecting section, a holding section to hold output from the optical power control section, and a switching section switched depending upon the data signal, thereby feeding any one of output from the optical power control section and output from the holding section to the light emitting element driving section.

Alternatively, the reference signal generating section may generate a reference current signal as the reference signal, and the optical power control section may include a monitor amplifying section to amplify the monitor signal, a current comparing section to compare the reference current signal from the reference signal generating section with output from the monitor amplifying section, and a light emitting element driving and controlling signal generating section to receive output from the current comparing section so as to generate the light emitting element driving and controlling signal depending upon output from the data detecting section.

Therefore, with this method, it is possible to instantaneously raise the optical output from the light emitting element without excessive emission, and hold the light emitting element driving and controlling signal irrespective of the length of burst period. As a result, it is possible to obtain stable and accurate optical output without a variation in power even at the next burst transmission time, and contribute to enhanced performance of the present unit.

Further, the reference signal generating section may generate a reference current signal as the reference signal, and the optical power control section may include a current comparing section to compare the reference current signal from the reference signal generating section with a monitor signal detected from optical output from the light emitting element, and a light emitting element driving and controlling signal generating section to receive output from the current comparing section so as to generate the light emitting element driving and controlling signal depending upon output from the data detecting section.

Thus, with this method, it is possible to simplify a circuit configuration because the optical power control section can directly compare the monitor signal with the reference current signal without amplification thereof.

Alternatively, the optical power control section may include a switch section to stop the reference current signal from the reference signal generating section at a burst non-transmission time.

Further, the optical power control section may include a switch section to stop the reference voltage signal from the reference signal generating section at a burst non-transmission time.

Therefore, with this method, since the optical power control section has the switch section to stop the reference signal from the reference signal generating section at the burst non-transmission time, it is possible to output the reference signal only for the predetermined time interval when the data signal is "1", and reduce power consumption of the optical power control section. As a result, there is an advantage of reduced power consumption of the whole unit.

Further, the light emitting element driving and controlling signal generating section may include a first switch section to stop output from the current comparing section at the burst non-transmission time, a charging capacitor to hold output from the current comparing section obtained through the first switch section, and a discharging resistor connected parallel to the charging capacitor with respect to the output from the current comparing section.

Therefore, with this method, the light emitting element driving and controlling signal generating section sets to provide the smallest possible time constant. Hence, it is possible to realize a more rapid rise of a light emitting element driving and controlling signal.

Alternatively, the optical power control section may additionally include an offset current generating section to generate an offset current fed to the reference current signal, and the above light emitting element driving and controlling signal generating section may be configured as a peak detecting section to detect a peak value of the output from the current comparing section

Further, the reference signal generating section may generate a reference current signal as the reference signal, an offset current generating section may be mounted to generate an offset current fed to the reference current signal, and the optical power control section may include a monitor amplifying section to amplify the monitor signal, a switch section to stop the reference current signal from the reference signal generating section at a burst non-transmission time, a current comparing section to compare the reference current signal from the reference signal generating section with output from the monitor amplifying section, and a light emitting element driving and controlling signal generating section to detect a peak value of output from the current comparing section so as to output the peak value as a light emitting element driving and controlling signal for a control of the light emitting element driving section.

Further, the reference signal generating section may generate a reference current signal as the reference signal, an offset current generating section may be mounted to generate an offset current fed to the reference current signal, and the optical power control section may include a switch section to stop the reference current signal from the reference signal generating section at a burst non-transmission time, a current comparing section to compare the reference current signal from the reference signal generating section with a monitor signal detected from optical output from the light emitting element, and a light emitting element driving and controlling signal generating section to detect a peak value of output from the current comparing section so as to output the peak value as a light emitting element driving and controlling signal for a control of the light emitting element driving section.

Therefore, with this method, the optical power control section additionally includes the offset current generating section to generate the offset current fed to the reference current signal at the burst non-transmission time. The current comparing section can cause a large difference between the monitor signal and the reference current signal to stop output of the light emitting element driving and controlling signal. Consequently, it is possible to avoid a malfunction of an optical output control at the burst non-transmission time, and contribute to enhanced performance of the present unit.

Further, the data detecting section may include delay sections to delay the input data signal, and a logic circuit to perform a logic operation between the data signal and delayed output obtained by delaying the data signal in the delay sections.

Therefore, with this method, the data detecting section samples the input data signal for a predetermined time interval to output the result. Thus, the optical power control section can output an optimal light emitting element driving and controlling signal.

Alternatively, the holding section may include an input buffer for a light emitting element driving and controlling signal from the optical power control section, a second switch section to stop output from the input buffer at a burst non-transmission time, and a charging capacitor connected to a feed line of the light emitting element driving and controlling signal so as to hold the light emitting element driving and controlling signal.

Therefore, with this method, since the holding section can gradually increase output from the optical power control section by the large time constant, it is possible to surely hold the light emitting element driving and controlling signal without an effect due to a variation in power of a signal output from the optical power control section.

Further, a switching control section may be mounted to make a control such that the switching section is switched over to output from the optical power control section at a burst transmission time, while the switching section is switched over to output from the holding section at a burst non-transmission time.

Therefore, with this method, the switching control section can perform switching of the light emitting element driving and controlling signal transmitted to the light emitting element driving section depending upon the burst transmission time or the burst non-transmission time of the data signal. It is possible to always feed a constant amount of light emitting element driving and controlling signal to the light emitting element driving section, and obtain stable and accurate optical output without a variation in power even in the second or later burst optical output.

Alternatively, there may be mounted an initial value generating section to add an initial value to a light emitting element driving and controlling signal outputted from the optical power control section.

Therefore, with this method, since the initial value generating section adds the initial value to the light emitting element driving and controlling signal output from the optical power control section, it is possible to provide a more rapid initial rise of the light emitting element driving and controlling signal, and enhance a processing speed of the present unit.

Further, an initial value from the initial value generating section may be fed to the output side of the holding section.

Therefore, with this method, since the initial value generating section adds the initial value to the light emitting element driving and controlling signal held in the holding section, it is possible to provide a more rapid initial rise of the light emitting element driving and controlling signal from the holding section to the light emitting element driving section, and enhance a processing speed of the present unit.

Alternatively, the initial value from the initial value generating section may respectively be fed to the input side and the output side of the holding section.

Therefore, with this method, since the initial value voltage generating section adds the initial value to both the output from the optical power control section and the output which has been held in the holding section, it is possible to provide a more rapid initial rise of the light emitting element driving and controlling signal, provide a high-speed initial rise of the light emitting element driving and controlling signal from the holding section to the light emitting element driving section, and enhance a processing speed of the present unit as in the above case.

Further, the reference signal generating section may generate the reference voltage signal as the reference signal, and the optical power control section may include a current/voltage converting section to convert into a voltage a monitor signal detected from optical output from the light emitting element, a voltage comparing section to compare output from the current/voltage converting section with the reference voltage signal generated in the reference signal generating section, and a light emitting element driving and controlling signal generating section to receive output from the voltage comparing section so as to generate depending upon output from the data detecting section a light emitting element driving and controlling signal for a control of the light emitting element driving section.

Therefore, with this method, even when the voltage signal is used, as in the above case, the holding section holds the light emitting element driving and controlling signal generated in the optical power control section, and any one of the light emitting element driving and controlling signal from the optical power control section and the signal held in the holding section is selected according to the switching of transmission/reception of the data signal. Therefore, it is possible to instantaneously raise the optical output from the light emitting element without excessive emission, and hold the light emitting element driving and controlling signal irrespective of the length of burst period. As a result, it is possible to obtain stable and accurate optical output without a variation in power even at the next burst transmission time, and contribute to enhanced performance of the present unit.

Alternatively, the reference signal generating section may generate the reference voltage signal as the reference signal, and the optical power control section may include a current/voltage converting section to convert into a voltage a monitor signal detected from optical output from the light emitting element, a peak detecting section to detect a peak value of a voltage signal output from the current/voltage converting section, a voltage comparing section to compare output from the peak detecting section with the reference voltage signal generated in the reference signal generating section, and a light emitting element driving and controlling signal generating section to receive output from the voltage comparing section so as to generate depending upon output from the data detecting section a light emitting element driving and controlling signal for a control of the light emitting element driving section.

Therefore, with this method, since the optical power control section detects the peak value of the signal obtained by converting the monitor signal into the voltage signal before the comparison in the voltage comparing section, the voltage comparing section can output the stable result of comparison. It is thereby possible to feed the stable light emitting element driving and controlling signal to the light emitting element driving section, or make the monitor signal and the reference voltage signal from the reference signal generating section in phase. As a result, it is possible to avoid the excessive emission of the light emitting element in the case of no data signal.

Alternatively, the optical power control section may additionally include an offset voltage generating section to generate an offset voltage fed to the reference voltage signal, and the light emitting element driving and controlling signal generating section may be configured as a peak detecting section to detect a peak value of output from the voltage comparing section.

Further, the reference signal generating section may generate a reference voltage signal as the reference signal, an offset voltage generating section may be mounted to generate an offset voltage fed to the reference voltage signal, and the optical power control section may include a current/voltage converting section to convert into a voltage a monitor signal detected from optical output from the light emitting element, a switch section to stop, at a burst non-transmission time, the reference voltage signal from the reference signal generating section, inputted into a voltage comparing section, the voltage comparing section to compare output from the current/voltage converting section with the reference voltage signal, and a light emitting element driving and controlling signal generating section to detect a peak value of output from the voltage comparing section so as to output the peak value as a light emitting element driving and controlling signal for a control of the light emitting element driving section.

Alternatively, the reference signal generating section may generate a reference voltage signal as the reference signal, an offset voltage generating section may be mounted to generate an offset voltage fed to the reference voltage signal, and the optical power control section may include a current/voltage converting section to convert into a voltage a monitor signal detected from optical output from the light emitting element, a peak detecting section to detect a peak value of a voltage signal output from the current/voltage converting section, a switch section to stop, at a burst non-transmission time, the reference voltage signal from the reference signal generating section, inputted into the voltage comparing section, the voltage comparing section to compare output from the current/voltage converting section with the reference voltage signal, and a light emitting element driving and controlling signal generating section to detect a peak value of output from the voltage comparing section so as to output the peak value as a light emitting element driving and controlling signal for a control of the light emitting element driving section.

Therefore, with this method, since the optical power control section additionally includes the offset voltage generating section to generate the offset voltage fed to the reference voltage signal at the burst non-transmission time, the voltage comparing section can cause a large difference between the monitor voltage signal and the reference voltage signal to stop output of the light emitting element driving and controlling signal. Consequently, it is possible to avoid a malfunction of an optical output control by the present unit at the burst non-transmission time, and contribute to enhanced performance of the present unit as in the above case.

BRIEF DESCRIPTION OF THE DRAWINGS

Fig. 1 is a block diagram showing a configuration of a light emitting element control unit according to the first embodiment of the present invention;
Fig. 2 is a block diagram showing an essential configuration of the light emitting element control unit according to the first embodiment of the present invention;
Fig. 3 is a block diagram showing a configuration of a data detecting section according to the first embodiment of the present invention;
Figs. 4(a) to 4(c) are time charts for explaining operations of the data detecting section according to the first embodiment of the present invention;
Fig. 5 is a diagram showing a circuit configuration in the vicinity of the high-speed current comparing section according to the first embodiment of the present invention;
Fig. 6 is a diagram showing a circuit configuration of the light emitting element driving and controlling signal generating section according to the first embodiment of the present invention;
Fig. 7 is a diagram showing a circuit configuration of a holding section according to the first embodiment of the present invention;
Figs. 8(a), 8(b) are diagrams for explaining operations of the holding section according to the first embodiment of the present invention;
Fig. 9 is a diagram showing a circuit configuration of a switching section according to the first embodiment of the present invention;
Figs. 10(a) to 10(c) are diagrams showing circuit configurations of a switching control section according to the first embodiment of the present invention;
Figs. 11(a) to 11(c) are time charts for explaining operations of the switching control section according to the first embodiment of the present invention;
Figs. 12(a) to 12(h) are time charts for explaining operations of the light emitting element control unit according to the first embodiment of the present invention;
Fig. 13 is a block diagram showing a first modification of the light emitting element control unit according to the first embodiment of the present invention;
Fig. 14 is a block diagram showing a second modification of the light emitting element control unit according to the first embodiment of the present invention;
Fig. 15 is a block diagram showing a third modification of the light emitting element control unit according to the first embodiment of the present invention;
Fig. 16 is a block diagram showing a fourth modification of the light emitting element control unit according to the first embodiment of the present invention;
Fig. 17 is a diagram showing a circuit configuration of a peak detecting section in the light emitting element control unit shown in Fig. 16;
Fig. 18 is a block diagram showing a fifth modification of the light emitting element control unit according to the first embodiment of the present invention;
Fig. 19 is a block diagram showing a sixth modification of the light emitting element control unit according to the first embodiment of the present invention;
Fig. 20 is a diagram showing a circuit configuration of an initial voltage generating section in the light emitting element control unit shown in Fig. 19;
Fig. 21 is a block diagram showing a seventh modification of the light emitting element control unit according to the first embodiment of the present invention;

Fig. 22 is a block diagram showing an eighth modification of the light emitting element control unit according to the first embodiment of the present invention;

Fig. 23 is a diagram showing a configuration of the light emitting element control unit according to the second embodiment of the present invention;

Fig. 24 is a diagram showing a circuit configuration of a current/voltage converting section in the light emitting element control unit according to the second embodiment of the present invention;

Fig. 25 is a block diagram showing a first modification of the light emitting element control unit according to the second embodiment of the present invention;

Fig. 26 is a block diagram showing a second modification of the light emitting element control unit according to the second embodiment of the present invention;

Fig. 27 is a block diagram showing a third modification of the light emitting element control unit according to the second embodiment of the present invention;

Fig. 28 is a block diagram showing a fourth modification of the light emitting element control unit according to the second embodiment of the present invention;

Fig. 29 is a block diagram showing a fifth modification of the light emitting element control unit according to the second embodiment of the present invention;

Fig. 30 is a block diagram showing a configuration of a light emitting element control unit;

Fig. 31 is a block diagram showing an essential configuration of the light emitting element control unit;

Fig. 32 is a diagram showing a circuit configuration in an essential part of an APC circuit;

Figs. 33(a) and 33(b) respectively show a circuit for explaining operations of a control signal generating section shown in Fig. 32; and

Figs. 34(a) to 34(h) are time charts for explaining operations of the light emitting element control unit shown in Fig. 31.

DESCRIPTION OF THE PREFERRED EMBODIMENTS

A description will now be given of embodiments of the present invention referring to the accompanying drawings.

(a) Description of First Embodiment

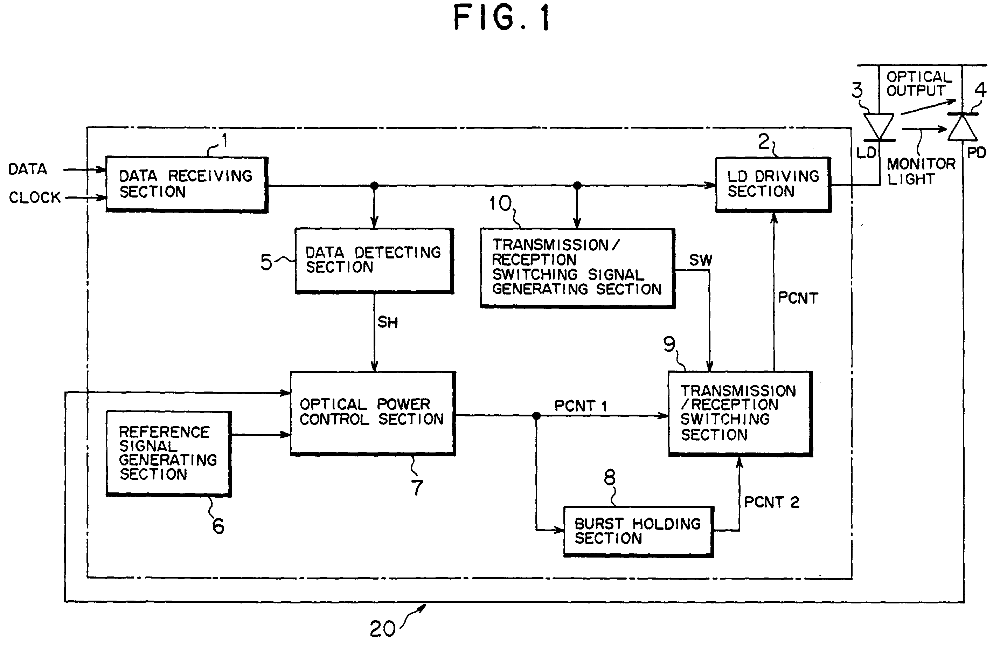

Fig. 1 is a block diagram showing a configuration of a light emitting element control unit according to the first embodiment of the present invention. As shown in Fig. 1, a light emitting element control unit 20 includes a data receiving section 1, an LD driving section 2, a light emitting element 3, a light receiving element 4, a data detecting section 5, a reference signal generating section 6, an optical power control section 7, a burst holding section 8, a transmission/reception switching section 9, and a transmission/reception switching signal generating section 10.

Here, the light emitting element 3 includes, for example, a laser diode (LD) to convert an electrical signal into an optical signal so as to feed an output signal to an optical transmission line (not shown), and output monitor light (a monitor signal). The light receiving element 4 includes, for example, a photo diode (PD) to again convert into the electric signal the monitor light output from the light emitting element 3.

The data receiving section 1 receives a data signal and a clock signal which are externally inputted, and the LD driving section (light emitting element driving section) 2 receives output from the data receiving section 1 to drive the light emitting element 3 according to the input data signal.

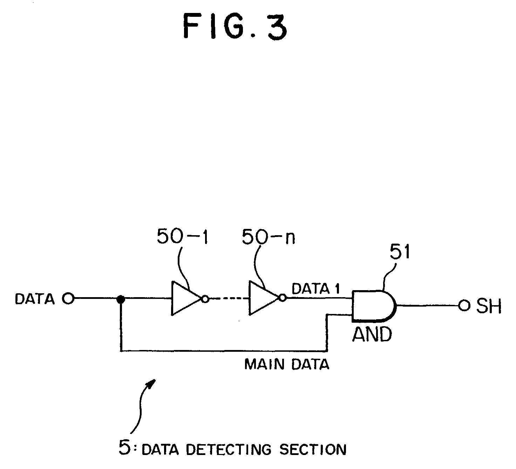

Further, the data detecting section 5 detects a data signal for a predetermined time interval during a burst transmission period, and generates a sampling signal for sampling in the optical power control section 7 depending upon the data received in the data receiving section 1, and includes, for example, inverters 50-1 to 50-n, and an AND circuit 51 as shown in Fig. 3.

Here, the inverters (delay sections) 50-1 to 50-n (n: even number more than or equal to 2) delay an input data signal. The AND circuit (logic circuit) 51 performs a logic operation between the data signal and delayed output obtained by delaying the data signal in the inverters 50-1 to 50-n.

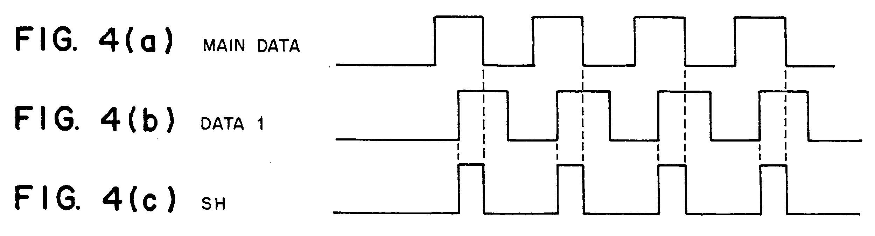

Specifically, as shown in, for example, Fig. 4, the data detecting section 5 extracts the sampling signal (SH) [see Fig. 4(c)] from the input data [main data; see Fig. 4(a)] and the data delayed by the inverters 50-1 to 50-n [data 1; see Fig. 4(b)], and outputs the extracted signal.

That is, by outputting as the sampling signal a signal which becomes "1" only for the predetermined time interval when the input data signal is "1" (during the burst transmission period), the optical power control section 7 can use the sampling signal to output an optimal optical output control signal as will be described infra.

Also, the above reference signal generating section 6 shown in Fig. 1 generates a reference current signal (dc constant current).

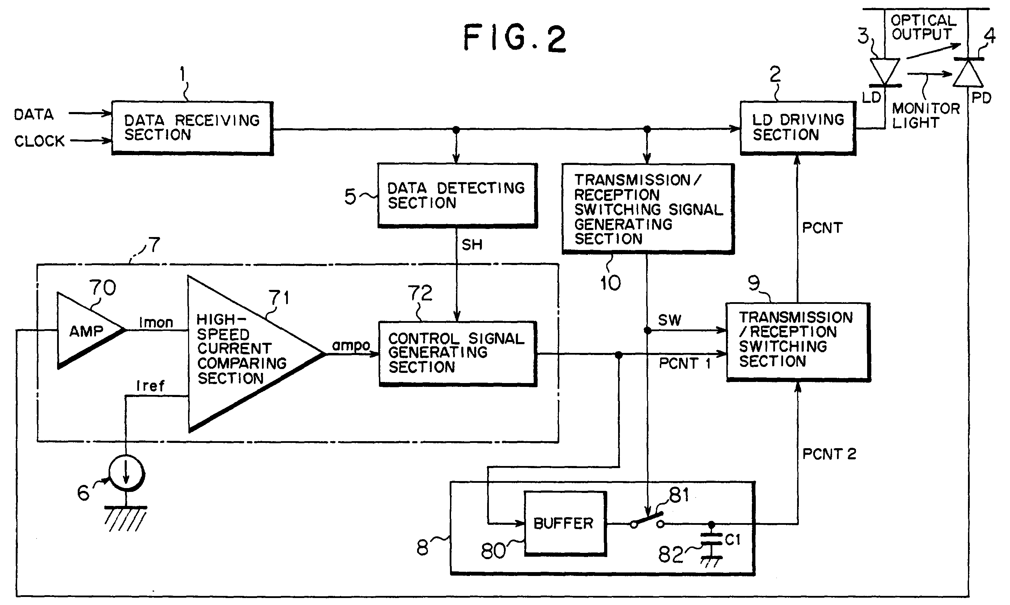

Further, the optical power control section 7 compares the monitor signal detected from the optical output from the light emitting element 3 with the reference current signal generated in the reference signal generating section 6 to output an optical output control signal (light emitting element driving control signal) for a control of the LD driving section 2 depending upon the result of comparison and the output from the data detecting section 5. The optical power control section includes an AMP 70, a high-speed current comparing section 71, and a control signal generating section 72 as shown in, for example, Fig. 2.

Here, the AMP (monitor amplifying section) 70 amplifies a monitor current (monitor signal) obtained by conversion of the light receiving element 4 into the electrical signal. The AMP 70 ensures a band of the monitor current.

Further, the high-speed current comparing section (current comparing section) 71 compares the reference current signal (Iref) from the reference signal generating section 6 with output (Imon) from the monitor amplifying section 70 to output the result of comparison (ampo) to the control signal generating section 72 at a subsequent stage.

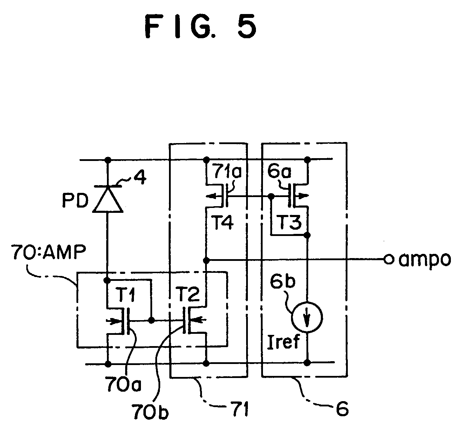

Fig. 5 is a diagram showing a circuit configuration in the vicinity of the above high-speed current comparing section 71. In Fig. 5, the light receiving element 4 has a cathode connected to a power source, and an anode connected to a drain of an N-channel MOSFET (T1) 70a.

Further, a diode connection is established in the above N-channel MOS transistor (N-channel MOSFET; T1) 70a with its drain and gate shorted, and a current mirror connection having a common gate is formed between the N-channel MOS transistor (T1) 70a and an N-channel MOS transistor (T2) 70b with their sources respectively connected to the ground. The two transistors 70a, 70b form the AMP 70.

Also, a reference constant current source 6b is connected between the ground and a drain of a P-channel MOS transistor (P-channel MOSFET; T3) 6a, and a diode connection is established in the P-channel MOS transistor (T3) 6a with its drain and gate shorted. Moreover, the P-channel MOS transistor (T3) 6a and the reference constant current source 6b form the reference signal generating section 6.

In addition, a current mirror connection having a common gate is formed between the P-channel MOS transistor (T3) 6a and the P-channel MOS transistor (T4) 71a with their sources respectively connected to the power source.

Also, a drain is shared between the above N-channel MOS transistor (T2) 70b and P-channel MOS transistor (T4) 71a, and the two transistors 70b, 71a form the high-speed current comparing section 71. Moreover, output (ampo) to the control signal generating section 72 is derived from between the transistors 70b and 71a.

That is, according to the above circuit configuration shown in Fig. 5, the AMP 70 can increase the output to the control signal generating section 72 when the current from the light receiving element 4 is smaller than the reference current, and can decrease the output to the control signal generating section 72 when the current from the light receiving element 4 is larger than the reference current.

Moreover, if the circuit is configured by using CMOS type transistors as the above transistors, it is possible to realize, for example, lower cost and reduced power consumption of the whole circuit.

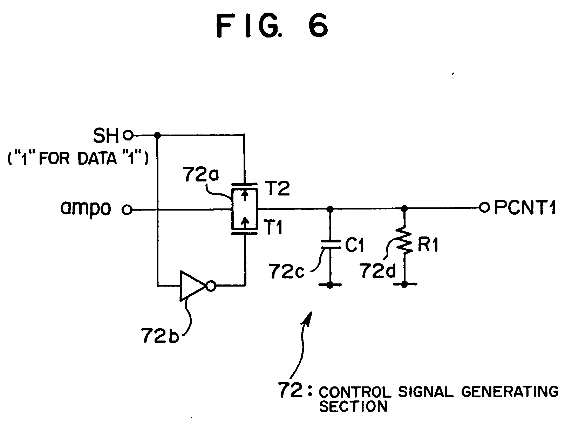

Further, a control signal generating section (light emitting element driving control signal generating section) 72 receives the output (ampo) from the high-speed current comparing section 71 to generate an optical output control signal (light emitting element driving control signal) depending upon the output from the data detecting section 5, and includes a switch 72a, an inverter 72b, a capacitor 72c, and a resistor 72d as shown in, for example, Fig. 6.

Here, the switch (first switch section) 72a stops the output from the high-speed current comparing section 71 when the data signal is "0" (that is, at a time other than a sampling time generated in the data detecting section 5; at a burst non-transmission time) depending upon the output from the data detecting section 5, and includes a P-channel MOS transistor (T1) and an N-channel MOS transistor (T2).

Specifically, the switch 72a is configured as an analog switch with the above P-channel MOS transistor (T1) and the N-channel MOS transistor (T2). In the above two transistors T1, T2, their drains are connected to the output (ampo) of the optical power control section 7, and their sources are connected to an optical output control terminal (PCNT1).

Further, into a gate of the N-channel MOS transistor (T2) is inputted the sampling signal (SH; the signal becoming "1" only for a predetermined time interval while the data is "1") generated in the above data detecting section 5, while into a gate of the P-channel MOS transistor (T1) is inputted a signal obtained by inverting a signal identical with the above sampling signal in the control signal generating section 72b.

That is, an ON control of the switch 72a is performed in response to input of the sampling signal from the data detecting section 5. It is thereby possible to output the output (ampo) from the high-speed current comparing section 71 as the optical output control signal (PCNT1). Moreover, with respect to an opposite polarity of the sampling signal, the transistors forming the analog switch may be of opposite polarity.

Also, the capacitor (charging capacitor; C1) 72c holds the output from the high-speed current comparing section 71 through the switch 72a, and has a holding capacitance connected between the optical output control terminal (PCNT1) and the ground. Moreover, a small time constant is set in the capacitor 72c.

In addition, a resistor (discharging resistor; R1) 72d adjusts an amount of optical output control signal (PCNT1) outputted from the optical output control terminal, and is connected parallel to the capacitor 72c with respect to the output from the high-speed current comparing section 71. In other words, the resistor is connected between the optical output control terminal and the ground to discharge, when an excessive optical output control signal is outputted from the optical outputted control terminal, the resistor discharges the excessive charge.

As stated above, in the optical power control section 7, the high-speed current comparing section 71 compares the monitor signal with the reference signal from the reference signal generating section 6, and the small time constant is set in the control signal generating section 72. Thus, it is possible to realize a more rapid rise of the optical outputted control signal (PCNT1).

Further, with the sampling signal from the data detecting section 5, the above optical power control section 7 samples only for the predetermined time interval while the data is "1", and holds at all other times, thereby preventing the outputted (PCNT1) from the optical power control section 7 from increasing when the data signal is "0". As a result, it is possible to eliminate excessive emission due to a phase difference between the monitor signal and the reference signal. Thus, an optimal optical outputted control signal can be fed to the LD driving section 2.

Also, the burst holding section (holding section) 8 shown in Fig. 1 holds the output from the optical power control section 7, and includes a buffer 80, a switch 81, and a capacitor 82 as shown in, for example, Fig. 2.

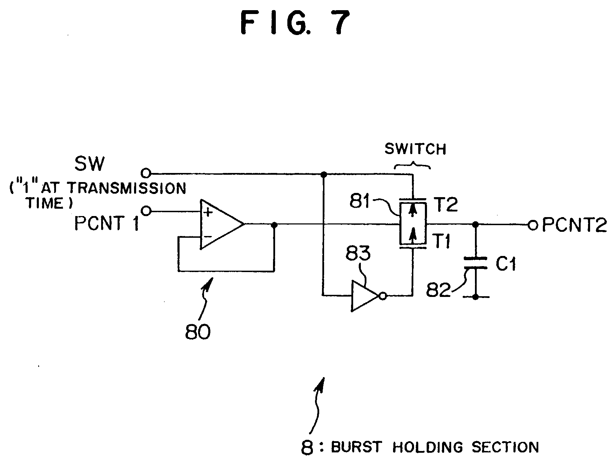

Here, the buffer (input buffer) 80 propagates (passes) the optical output control signal from the optical power control section 7 to the capacitor 82 described infra, thereby stopping a current flow. Specifically, as shown in Fig. 7, the buffer 80 is configured as a voltage follower with a positive-phase input of an operational amplifier taking as input the optical output control signal (PCNT1) from the control signal generating section 72, and an inverting input and output shorted.

Also, the switch (second switch section) 81 stops output from the buffer 80 at the burst non-transmission time, and is interposed between the buffer 80 and the capacitor 82. Depending upon the transmission/reception switching signal generating section 10 described infra, an ON control of the switch is performed at the burst transmission time of the data signal, and an OFF control thereof is performed at the burst non-transmission time.

Specifically, the switch 81 is an analog switch including a P-channel MOS transistor (T1) and an N-channel MOS transistor (T2) with their drains connected to the output of the buffer 80 and their sources connected to an optical output control terminal (PCNT2).

Also, into a gate of the N-channel MOS transistor (T2) is inputted a switching signal (the signal becoming "1" at the burst transmission time) generated in the transmission/reception switching signal generating section 10 described infra, while into a gate of the P-channel MOS transistor (T1) is inputted a signal obtained by inverting in the inverter 83 a signal identical with the signal inputted into the gate of the N-channel MOS transistor (T2). Moreover, with respect to an opposite polarity of the above transmission/reception switching signal, the respective transistors (T1, T2) forming the above analog switch may be of opposite polarity.

Further, the capacitor (charging capacitor; C1) 82 is connected between a feed line (optical outputted control terminal) of the optical output control signal (PCNT2) and the ground to hold the optical output control signal, and is charged with a signal corresponding to the optical output control signal from the control signal generating section 72. Moreover, a large time constant is set in the capacitor 82, and the capacitor has an enough capacitance value to hold the above charging voltage for the burst period.

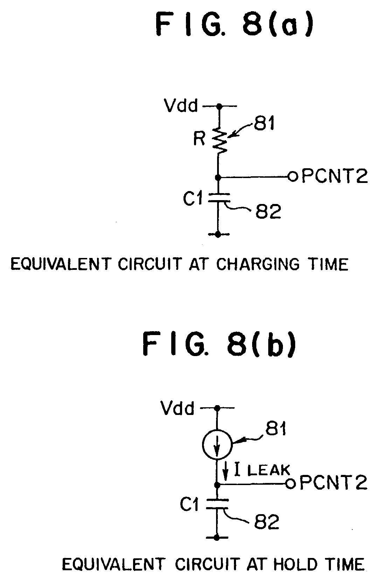

Specifically, in the above burst holding section 8, as shown in Fig. 8(a), the switch 81 is set by the ON control to function as a resistor at the charging time. The capacitor 82 is thereby charged with the optical output control signal (PCNT1) passed from the buffer 80 serving as a holding optical output control signal (PCNT2). A relational expression with respect to the charging time can be written as the following expression (3):

$$\Delta V_{PCNT2} = Vdd \times [1 - exp(-t(chr)/RxC1)]$$

where    $t(chr)$; Time required for charging
         R; Value of resistance obtained by ON control of switch 81
         $\Delta V_{PCNT2}$; Amont of change in voltage at terminal PCNT2

Therefore, it is possible to obtain the expression:

$$t(chr) = -R \times C1 \times ln[(Vdd-\Delta V_{PCNT2})/Vdd] \quad (3)$$

Further, in the above burst holding section 8, as shown in Fig. 8(b), the switch 81 is set by the OFF control to function as a power source at a holding time. Then, a leak current flows through the capacitor 82. A relational expression with respect to a holding time can be obtained as the following expression (4):

$$t(hold) = (C1 \times \Delta V_{PCNT})/I(leak) \quad (4)$$

where    $t(hold)$; Time required for holding
         $I(leak)$; Leak current of switch 81
         $\Delta V_{PCNT2}$; Amont of change in voltage at terminal PCNT2

That is, since the above holding time is identical with the holding time [see Expression (2)] of the existing circuit (control signal generating section 110) described above referring in Fig. 32, the present circuit (control signal generating section 72) has the same holding time as that of the existing circuit for the same capacitance value, the same amount of change in voltage, and the same leak current.

Then, the following discussion focuses on, for example, the above charging time of present circuit and the charging time [see Expression (1)] of the existing circuit described above referring to Fig. 32. When the switches 81 (see Fig. 8) and 110b (see Fig. 32) are identical in transistor size, for Vdd = 3.3V, I(chr) = 30mA, R = 3Ω, C1 = 39000pF, $V_{PCNT} = \Delta V_{PCNT2} = 1.5V$, the charging time can be calculated according to the above Expression (1) as follows:

$$t(chr) = (C1 \times \Delta V_{VCNT})/I(chr)$$
$$= (39000pF \times 1.5V)/30mA$$
$$= 1.95 \ \mu sec$$

On the other hand, another charging time can be calculated according to the above Expression (3) as follows:

$$t(chr) = -R \times C1 \times \ln[(Vdd-\Delta_{VPCNT2})/Vdd]$$
$$= -3 \times 39000pF \times \ln[(3.3-1.5)/3.3V]$$
$$= 0.071 \ \mu sec$$

That is, it can be seen that a difference of about two decimal places is caused in charging time between the present circuit and the existing circuit. That is, the present circuit can be charged at a speed higher than that of the existing circuit. In other words, it means that, for the same charging time, a longer holding time can be ensured in the present circuit than that of the existing circuit by about two decimal places.

As described above, in the burst holding section 8, it is possible to sufficiently hold the output from the optical power control section 7, transmitted during the burst transmission period, as the optical output control signal (PCNT2) by setting a large time constant of the capacitor 82.

That is, since the output from the optical power control section 7 can gradually be increased by the large time constant, the burst holding section 8 can surely hold the optical output control signal (PCNT2) without an effect due to a variation in power of the signal outputted from the optical power control section 7.

Also, the transmission/reception switching section (switching section) 9 shown in Fig. 1 is switched depending upon output (data signal) from the transmission/reception switching signal generating section 10 described infra, thereby feeding as the optical output control signal (PCNT) to the above LD driving section 2 any one of the output (PCNT1) from the optical power control section 7 and the output (PCNT2) from the burst holding section 8. The transmission/reception switching section outputs as the optical output control signal the output from the optical power control section 7 at the burst transmission time, while outputting as the optical output control signal the output (voltage signal with which the capacitor 82 is charged) from the burst holding section 8 at the burst non-transmission time (at a receive time).

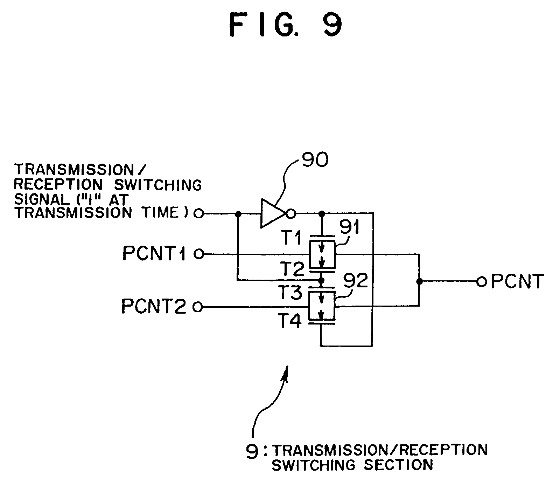

Specifically, as shown in, for example, Fig. 9, the transmission/reception switching section 9 includes an inverter 90, and switches 91, 92. Here, the switch 91 is an analog switch including a P-channel MOS transistor (T1) and an N-channel MOS transistor (T2), and is set by an ON control at the burst transmission time to output as the optical output control signal the output (PCNT1) from the optical power control section 7.

Also, the switch 92 is an analog switch including a P-channel MOS transistor (T3) and an N-channel MOS transistor (T4), and is set by an ON control at the burst non-transmission time to output as the optical output control signal the output (PCNT2) from the burst holding section 8.

Further, the inverter 90 inverts the output from the transmission/reception switching signal generating section 10. The inverted output is inputted into a gate of the P-channel MOS transistor (T1) of the switch 91, and a gate of the N-channel MOS transistor (T4) of the switch 92.

As stated above, in the transmission/reception switching section 9, when the switch 91 is ON (OFF), the switch 92 is turned OFF (ON) in response to the switching control signal (timing signal) from the transmission/reception switching signal generating section 10, and the two terminals (P1, P2) are short-circuited to terminal PCNT respectively. This short-circuits perform a switching operation with conducting states of the switches 91, 92 mutually inverted.

Also, the transmission/reception switching signal generating section (switching control section) 10 shown in Fig. 1 makes a control in that the transmission/reception switching section 9 is switched over to the output from the optical power control section 7 at the burst transmission time, while the transmission/reception switching section 9 is switched over to the output from the burst holding section 8 at the burst non-transmission time. The transmission/reception switching section 9 generates a timing signal for the switching of transmission/reception.

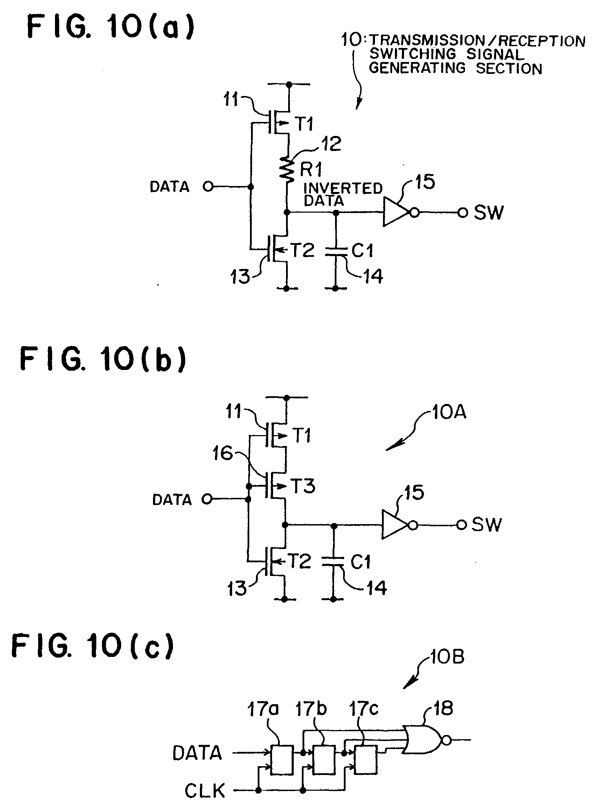

Specifically, the above transmission/reception switching signal generating section 10 is a circuit to detect a "zero succession" of data, and includes a P-channel MOS transistor (T1) 11, a resistor 12, an N-channel MOS transistor (T2) 13, a capacitor 14, and an inverter 15 as shown in, for example, Fig. 10(a).

Here, the P-channel MOS transistor (T1) 11 has a source connected to the power supply, and a gate connected to a data input terminal, and the N-channel MOS transistor (T2) 13 has a source connected to the ground, and a gate connected to the data input terminal. A resistor (R1) 12 is connected between drains of the MOS transistors 11, 13.

Also, the capacitor (C1) 14 is connected between the drain of the N-channel MOS transistor (T2) 13 and the ground, and the inverter 15 is connected between the drain of the N-channel MOS transistor (T2) 13 and an output terminal (SW terminal).

As set forth above, in the above transmission/reception switching signal generating section 10 shown in Fig. 10(a), when the data input terminal is "1", the P-channel MOS transistor (T1) 11 is turned OFF, and the N-channel MOS transistor (T2) 13 is turned ON, resulting in "0" at an inverted data terminal. Thereby, the inverted data "0" is again inverted by the inverter 15, resulting in "1" at the SW terminal. Moreover, if the N-channel MOS transistor (T2) 13 is increased in size, a sequence of operations between the data input and the SW signal output can be performed instantaneously.

On the other hand, in the above transmission/reception switching signal generating section 10, when the data input terminal is "0", the N-channel MOS transistor (T2) 13 is turned OFF, and the P-channel MOS transistor (T1) 11 is turned ON. Therefore, a signal from the P-channel MOS transistor (T1) 11 passes through the resistor 12, and the capacitor 14 is charged therewith, resulting in an increase at the inverted data terminal.

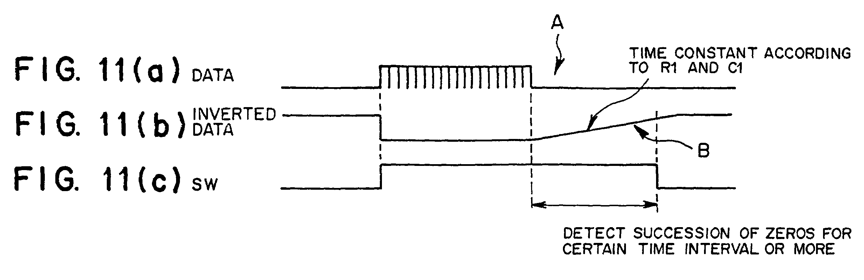

However, in the charging of the above capacitor 14, it is possible to adjust a rate of rise of the above inverted data according to the time constant set depending upon the capacitance value (C1) of the capacitor 14 and the value of resistance (R1) of the resistor 12. That is, even when input of the data "0" (detection of the zero succession) continues for a predetermined time interval (see reference mark A) as shown in, for example, Fig. 11(a), an operation can be performed to prevent the inverted data terminal from instantaneously rising to "1" as shown in Fig. 11(b) (see reference mark B).

Consequently, a time elapsing between a time point where the inverted data terminal becomes "1" and a time point where the data becomes "0" may be set longer than the maximum time interval in which the same code may successively be inputted. Thereby, the transmission/reception switching signal generating section 10 can always output "1" as the SW signal at a transmit time (in the case of "1"), and output "0" after the elapse of a predetermined time at a receive time (in the case of "0") [see Fig. 11(c)].

As described above, the transmission/reception switching signal generating section 10 can perform switching of the optical output control signal (PCNT) transmitted to the LD driving section 2 depending upon the burst transmission time or the burst non-transmission time of the data signal. It is possible to always feed a constant amount of optical output control signal to the LD driving section 2, and obtain stable and accurate optical output without a variation in power even in the second or later burst optical output.

Alternatively, the above transmission/reception switching signal generating section 10 may be configured as a transmission/reception switching signal generating section 10A shown in, for example, Fig. 10(b). That is, the transmission/reception switching signal generating section 10A is a circuit including a P-channel MOS transistor (T3) 16 instead of the resistor 12 of the above transmission/reception switching signal generating section 10 shown in Fig. 10(a). In this case, the same operation can be performed as in the above discussion.

In addition, the above transmission/reception switching signal generating section 10 may be configured as a transmission/reception switching signal generating section 10B shown in, for example, Fig. 10(c). Specifically, the transmission/reception switching signal generating section 10B is a shift-register type circuit including a plurality of registers 17a, 17b, and 17c, and a NOR circuit 18. In this case, the succession of "0s" for a predetermined time interval carries out the switching to "1" as in the above case.

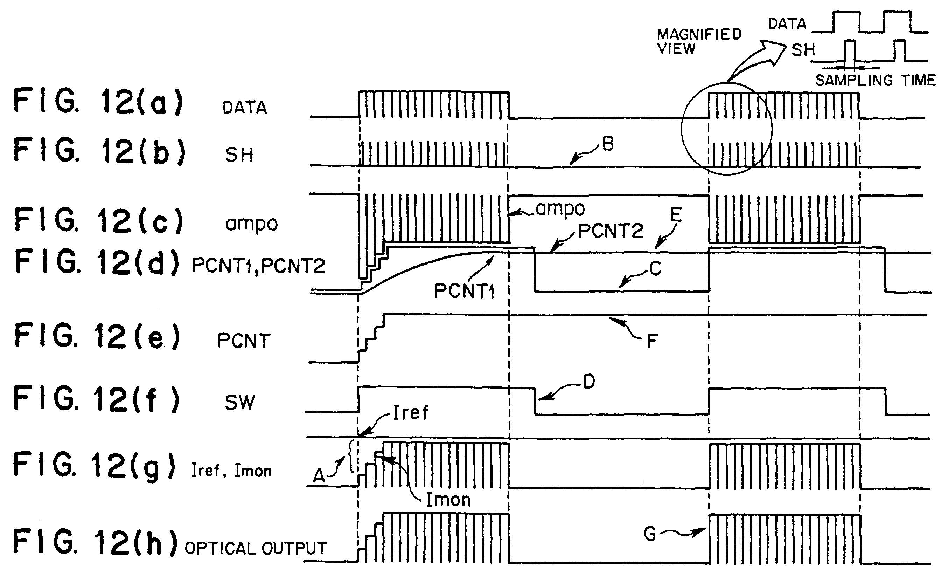

In the light emitting element control unit 20 having the above configuration according to the first embodiment of the present invention, as shown in Fig. 12(a), when the first burst data signal is inputted, there is an initial difference between the reference signal Iref from the reference signal generating section 6 and the monitor signal Imon from the light receiving element 4 [Iref > Imon; see reference mark A in Fig. 12(g)]. Thus, depending upon the difference, the light emitting element control unit outputs the result of comparison (ampo) in the high-speed current comparing section 71 as shown in Fig. 12(c).

Thereafter, the control signal generating section 72 receives the result of comparison, and outputs the optical output control signal PCNT1 depending upon the sampling time [SH; see Fig. 12(b)] from the data detecting section 5 as shown in Fig. 12(d).

At the same time, the control signal generating section 72 transmits the above optical output control signal (PCNT1) to the burst holding section 8, and the burst holding section 8 receives the optical output control signal to hold the optical output control signal (PCNT2) for the burst period holding depending upon a predetermined large time constant. That is, the burst holding section 8 gradually causes the optical output control signal (PCNT2) to rise so as to coincide with the output (PCNT1) from the control signal generating section 72 as shown in Fig. 12(d).

That is, the present unit 20 raises the two optical output control signals having the different time constants depending upon the first burst data signal.

Moreover, since the state is established for the burst transmission period, the transmission/reception switching signal generating section 10 outputs "1" as the transmission/reception switching signal (SW) as shown in Fig. 12(f), and transmits the signal to the transmission/reception switching section 9. Subsequently, in the transmission/reception switching section 9 receiving the SW signal, as described referring to Fig. 9, the switch 91 is set by an ON control to output to the LD driving section 2 the output (PCNT1) from the control signal generating section 72 as the optical output control signal (PNCT) [see Fig. 12(e)].

Then, in response to the above optical output control signal, the light emitting element 3 outputs an optical signal as shown in Fig. 12(h).

On the other hand, when no data signal is inputted, that is, for the burst non-transmission period, no monitor signal is detected and the data detecting section 5 can detect no sampling time [see reference mark B in Fig. 12(b)]. Hence, the control signal generating section 72 outputs no optical output control signal (PNCT1) [see reference mark C in Fig. 12(d)].

Further, if the detection of zero succession continues for a predetermined time interval, the transmission/reception switching signal generating section 10 outputs "0" as the SW signal [see reference mark D in Fig. 12(f)], and transmits the signal to the transmission/reception switching section 9. Thereafter, in the transmission/reception switching section 9, the switch 92 (see Fig. 9) is set by an ON control to output to the LD driving section 2 the signal [PNCT2; see reference mark E in Fig. 12(d)] held in the burst holding section 8 as the optical output control signal (PCNT).

That is, even for the burst non-transmission period, the above burst holding section 8 maintains a constant state of the output (PNCT1) from the control signal generating section 72. Accordingly, a predetermined amount of optical output control signal (PCNT) can always be fed to the LD driving section 2 [see reference mark F in Fig. 12(e)].

Subsequently, when a data signal is again inputted (for the next burst transmission period), to the LD driving section 2 is fed an optical output control signal at the same level as that in the precedent burst transmission period. Thus, the light emitting element 3 can instantaneously output a stable optical signal [see reference mark G in Fig. 12(h)].

As set forth above, in the light emitting element control unit 20 according to the first embodiment of the present invention, the burst holding section 8 holds the optical output control signal generated in the optical power control section 7, and any one of the optical output control signal from the optical power control section 7 and the signal held in the burst holding section 8 is selected according to the switching of transmission/reception of the data signal. Therefore, it is possible to instantaneously raise the optical output in the light emitting element 3 without the excessive emission, and hold the optical output control signal irrespective of the length of burst period. As a result, it is possible to obtain stable and accurate optical output without the variation in power even at the subsequent burst transmission time, resulting in a contribution to enhanced performance of the present unit.

(b) Description of Modifications of First Embodiment

Meanwhile, the above light emitting element control unit 20 may be configured as a plurality of modifications as shown infra (the first modification to the eighth modification). Moreover, the same reference numerals as those in the above discussion are used for the same or substantially the same functions in the drawings showing the following modifications, and descriptions thereof are omitted.

(b-1) First Modification

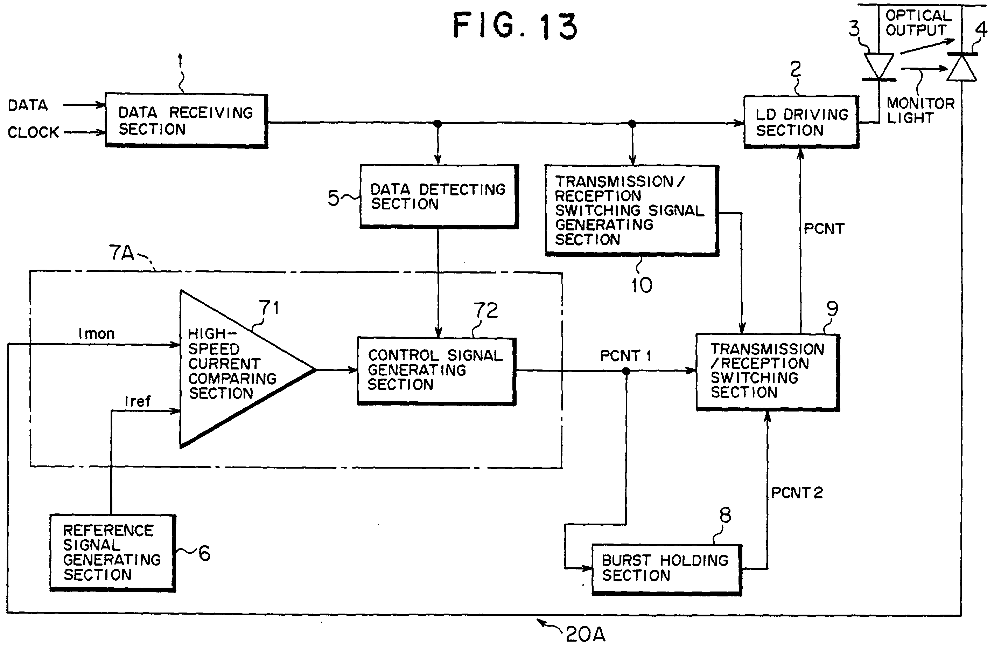

Fig. 13 is a block diagram showing a first modification (light emitting element control unit 20A) of the light emitting element control unit according to the first embodiment of the present invention. As shown in Fig. 13, an optical power control section 7A compares a monitor signal detected from a light emitting element 3 with a reference signal generated in a reference signal generating section 6 to output an optical output control signal for a control of an LD driving section 2 depending upon the result of comparison and output from a data detecting section 5. The optical power control section includes a high-speed current comparing section 71, and a control signal generating section 72.

That is, according to the optical power control section 7 in the first embodiment described above referring to Fig. 2, the AMP 70 for amplifying the monitor signal is mounted at the preceding stage of the high-speed current comparing section 71. Nevertheless, the AMP 70 is not mounted in the optical power control section 7A in the first modification unlike the above optical power control section 7.

That is, since it is unnecessary to amplify the monitor signal if, for example, the data signal has a low bit rate, the AMP 70 is eliminated so that the high-speed current comparing section 71 can directly compare the monitor signal with the reference current signal.

In the light emitting element control unit 20A having the above configuration according to the first modification of the first embodiment of the present invention, in response to input of the first burst data signal, the high-speed current comparing section 71 compares the reference signal from the reference signal generating section 6 with the monitor signal from a light receiving element 4, and a control signal generating section 72 subsequently receives the above result of comparison to transmit an optical output control signal (PCNT1) to a transmission/reception switching section 9 and a burst holding section 8 depending upon the output from the data detecting section 5.

In this state, that is, for the burst transmission period of the data signal, output (PCNT1) from the control signal generating section 72 is fed as an optical output control signal (PCNT) to the LD driving section 2 depending upon a switching control signal from a transmission/reception switching signal generating section 10.

On the other hand, for the burst non-transmission period of the data signal, a signal (PCNT2) held in the burst holding section 8 is fed as the optical output control signal (PCNT) to the LD driving section 2 depending upon the switching control signal from the transmission/reception switching signal generating section 10 as in the above case.

Thereby, when an additional data signal is inputted, to the LD driving section 2 has been fed the optical output control signal at the same level as that in the precedent burst transmission period so that the light emitting element 3 can instantaneously output a stable optical signal.

As stated above, according to the above light emitting element control unit 20A, it is possible to obtain the same effects as those in the first embodiment, and simplify a circuit configuration because the optical power control section 7A can directly compare the monitor signal with the reference current signal without amplification of the monitor signal.

(b-2) Second Modification

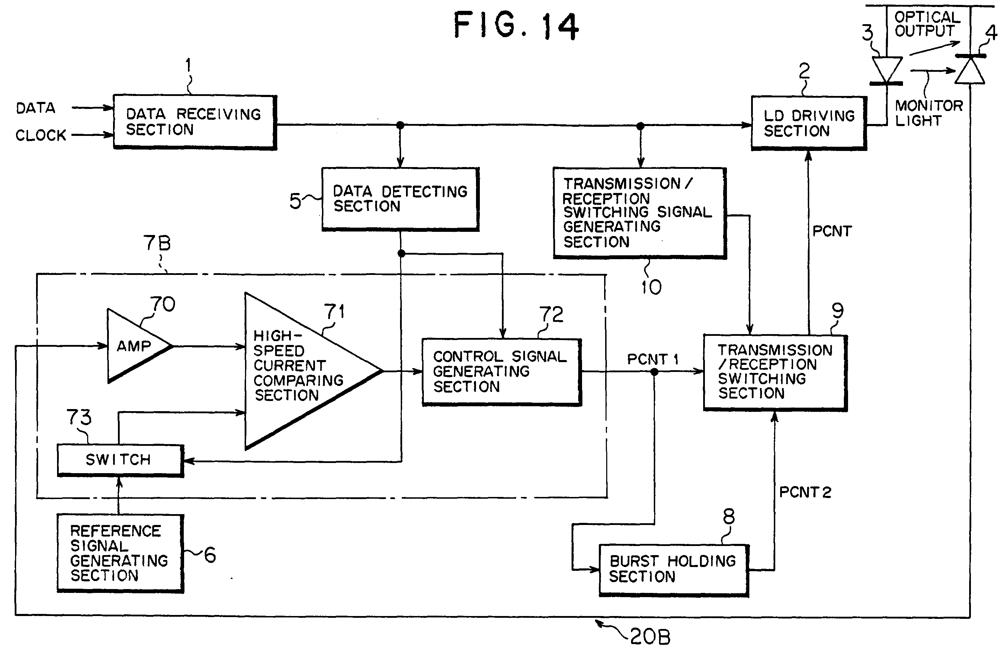

Fig. 14 is a block diagram showing a second modification (light emitting element control unit 20B) of the light emitting element control unit according to the first embodiment of the present invention. As shown in Fig. 14, an optical power control section 7B functions substantially as in the power control section 7 (the first embodiment) described above referring to Fig. 2, and includes an AMP 70, a high-speed current comparing section 71, a control signal generating section 72, and a switch 73. That is, unlike the above optical power control section 7, the switch 73 is mounted.

Here, the switch (switch section) 73 stops a reference current signal from a reference signal generating section 6 when a data signal is "0" (at a burst non-transmission time), and is connected between the reference signal generating section 6 and the high-speed current comparing section 71. Further, the ON/OFF control of the switch is performed depending upon output (SH; sampling signal ) from a data detecting section 5.

That is, in the optical power control section 7B of the second modification, the switch 73 is mounted on the output side of the reference signal generating section 6, and the reference signal generating section 6 thereby outputs the reference current signal only for a predetermined time interval when the data signal is "1". Hence, it is possible to reduce power consumption of the optical power control section 7B.

A description will now be given of the operation of the light emitting element control unit 20B according to the second modification of the first embodiment of the present invention. First, in response to input of the first burst data signal, the data detecting section 5 generates a sampling signal depending upon the data signal. The switch 73 receives the signal, and is set by an ON control to output the reference current signal from the reference signal generating section 6 to the high-speed current comparing section 71.

Thereafter, the high-speed current comparing section 71 compares the above reference current signal with a monitor signal from a light receiving element 4, amplified by the AMP 70, and the control signal generating section 72 receives the above result of comparison, and transmits an optical output control signal (PCNT1) to a transmission/reception switching section 9 and a burst holding section 8 depending upon the above sampling signal from the data detecting section 5.

Subsequently, substantially the same operation is performed as in the above first embodiment. That is, for the burst transmission period of the data signal, the output (PCNT1) from the control signal generating section 72 is fed to the LD driving section 2 as the optical output control signal (PCNT). For the burst non-transmission period, the switch 73 is set by the OFF control to feed a signal (PCNT2) held in the burst holding section 8 to the LD driving section 2 as the optical output control signal (PCNT).

As set forth above, according to the above light emitting element control unit 20B, the same effects can be obtained as those in the first embodiment. Further, it is possible to output the reference current signal only for the predetermined time interval when the data signal is "1" since the optical power control section 7B has the switch 73 to stop the reference signal from the reference signal generating section 6 when the data signal is "0" (at a burst non-transmission time), thereby reducing power consumption of the optical power control section 7B. As a result, there is an advantage of reduced power consumption of the whole unit.

(b-3) Third Modification

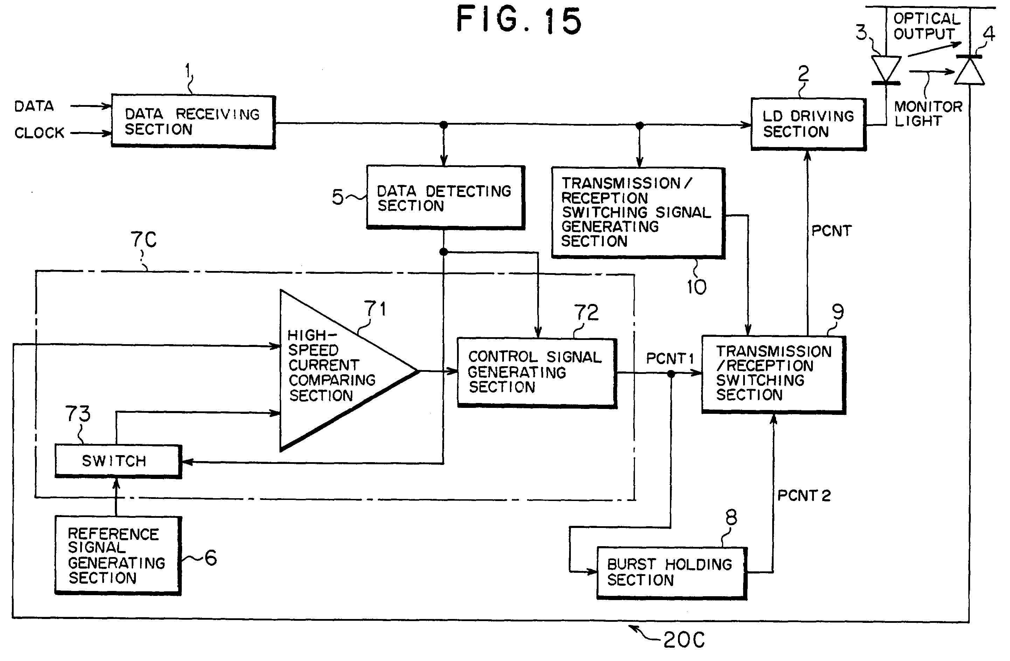

Fig. 15 is a block diagram showing a third modification (light emitting element control unit 20C) of the light emitting element control unit according to the first embodiment of the present invention. As shown in Fig. 15, an optical power control section 7C functions substantially as in the power control section 7A (the first modification) described above referring to Fig. 13, and includes a high-speed current comparing section 71, a control signal generating section 72, and a switch 73. That is, unlike the above optical power control section 7A, the switch 73 is mounted.

That is, in the optical power control section 7C of the third modification, the switch 73 is mounted on the output side of the reference signal generating section 6 as in the above case. Hence, it is possible to reduce power consumption of the optical power control section 7C, and apply when, for example, a data signal has a low bit rate.

A description will now be given of the operation of the light emitting element control unit 20C according to the third modification of the first embodiment of the present invention. First, in response to input of the first burst data signal, a data detecting section 5 generates a sampling signal depending upon the data signal. The switch 73 receives the signal, and is set by an ON control to output a reference current signal from a reference signal generating section 6 to the high-speed current comparing section 71.

Thereafter, the high-speed current comparing section 71 compares the above reference current signal with a monitor signal from a light receiving element 4, and the control signal generating section 72 receives the above result of comparison, and transmits an optical output control signal PCNT1 to a transmission/reception switching section 9 and a burst holding section 8 depending upon the above sampling signal from the above data detecting section 5.

Subsequently, substantially the same operation is performed as in the above first embodiment. That is, for the burst transmission period of the data signal, the output (PCNT1) from the control signal generating section 72 is fed to the LD driving section 2 as the optical output control signal (PCNT). For the burst non-transmission period, a signal (PCNT2) held in the burst holding section 8 is fed to the LD driving section 2 as the optical output control signal (PCNT).

As set forth above, according to the above light emitting element control unit 20C, the same effects can be obtained as those in the first embodiment. Further, in the optical power control section 7C, it is possible to simplify a circuit configuration because the monitor signal can directly be compared with the reference current signal without amplification, and reduce power consumption of the optical power control section 7C because the reference current signal is outputted only for the predetermined time interval when the data signal is "1".

(b-4) Fourth Modification

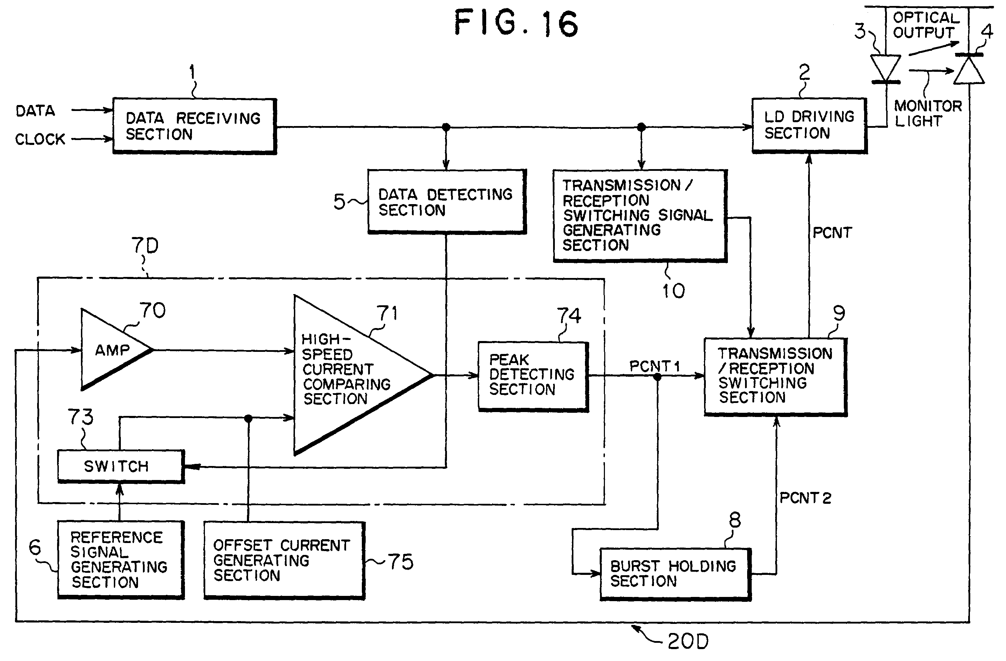

Fig. 16 is a block diagram showing a fourth modification (light emitting element control unit 20D) of the light emitting element control unit according to the first embodiment of the present invention. As shown in Fig. 16, in the light emitting element control unit 20D, an optical power control section 7D includes an AMP 70, a high-speed current comparing section 71, a switch 73, and a peak detecting section 74. Further, the optical power control section 7D additionally includes an offset current generating section 75 to generate an offset current fed to a reference current signal from a reference signal generating section 6.

Specifically, the above offset current generating section 75 feeds the offset current to the reference current signal for a period in which the data signal is "0" (for a burst non-transmission period).

That is, since an optical output from a light emitting element 3 must be stopped when no data signal is inputted, it is necessary to stop output of an optical output control signal for a control of an LD driving section 2. However, at this point in time, when a slight difference is caused between a monitor signal ("0"; because of no optical output from the light emitting element 3) and the reference signal ("0"; stop by the switch 73), the high-speed current comparing section 71 compares them to output the result of comparison to the peak detecting section 74. That is, the peak detecting section 74 erroneously outputs the optical output control signal.

Therefore, in the optical power control section 7D, the offset current generating section 75 feeds an offset current to cause a large difference between the monitor signal and the reference signal, which does not become a candidate for the comparison, thereby avoiding erroneous generation of the optical output control signal. It is thereby possible to prevent a malfunction of an optical output control by the present unit 20D.

Also, the peak detecting section 74 detects a peak value of output from the high-speed current comparing section 71, and functions as a light emitting element driving and controlling signal generating section. That is, the peak detecting section 74 outputs the above detected peak value as the optical output control signal for the control of the LD driving section 2.

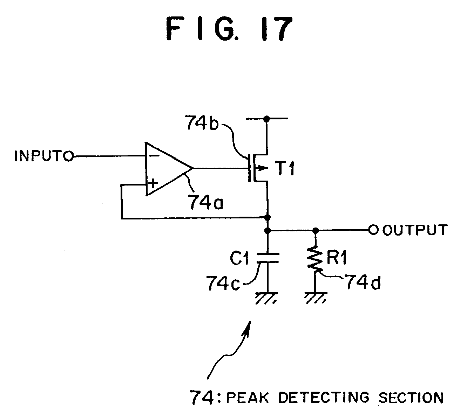

For example, as shown in Fig. 17, there are mounted an amplifier 74a, a P-channel MOS transistor 74b, a capacitor 74c, and a resistor 74d.

Also, the amplifier 74a amplifies the output from the high-speed current comparing section 71, and has an inverting input taking as input the output from the high-speed current comparing section 71, and a non-inverting input connected to the peak detection output. The output of the amplifier 74a is connected to a gate of the P-channel MOS transistor (T1) 74b.

Also, the P-channel MOS transistor (T1) 74b has a source connected to a power supply, the gate connected to the output of the amplifier 74a as described above, and a drain connected to the peak detection output. Further, the capacitor (C1) 74c has a capacitance connected between the peak detection output and the ground, and the resistor (R1) 74d is connected between the peak detection output and the ground.

In addition, a large time constant is set in the peak detecting section 74 in order to hold the output from the high-speed current comparing section 71 for the burst transmission period.

A description will now be given of the operation of the light emitting element control unit 20D according to the fourth modification of the first embodiment of the present invention. First, in response to input of the first burst data signal, a data detecting section 5 generates a sampling signal depending upon the data signal. The switch 73 receives the signal, and is set by an ON control to output a reference current signal from a reference signal generating section 6 to the high-speed current comparing section 71.

Thereafter, the high-speed current comparing section 71 compares the above reference current signal with a monitor signal from a light receiving element 4, amplified by the AMP 70, and the peak detecting section 74 detects the peak value from the above result of comparison, and transmits the peak value as an optical output control signal (PCNT1) to a transmission/reception switching section 9 and a burst holding section 8.

In this state, that is, for the burst transmission period of the data signal, output (PCNT1) from the peak detecting section 74 is fed as an optical output control signal (PCNT) to the LD driving section 2 depending upon a switching control signal from a transmission/reception switching signal generating section 10.

On the other hand, for the burst non-transmission period of the data signal, a signal (PCNT2) held in the burst holding section 8 is fed as the optical output control signal (PCNT) to the LD driving section 2 depending upon the switching control signal from the transmission/reception switching signal generating section 10 as in the above case.

Further, at this point in time, since the data detecting section 5 outputs no sampling signal, an OFF control of the switch 73 is performed so that the reference current signal from the reference signal generating section 6 is not fed to the high-speed current comparing section 71. Subsequently, since the offset current from the offset current generating section 75 is fed to the high-speed current comparing section 71, the high-speed current comparing section 71 outputs no differential current between the monitor signal and the reference current signal. As a result, the peak detecting section 74 outputs no optical output control signal (PCNT1).

Therefore, as in the above case, when an additional data signal is inputted, to the LD driving section 2 has been fed the optical output control signal at the same level as that in the precedent burst transmission period so that the light emitting element 3 can instantaneously output a stable optical signal.

As stated above, according to the above light emitting element control unit 20D, it is possible to obtain the same effects as those in the first embodiment. In the optical power control section 7D, when no data signal is inputted, an offset current from the offset current generating section 75 is fed to the reference current signal so that the high-speed current comparing section 71 causes a large difference between the monitor signal and the reference current signal to stop output of the optical output control signal. Consequently, it is possible to avoid a malfunction of an optical output control at the burst non-transmission time, resulting in a contribution to enhanced performance of the present unit 20D.

Moreover, though the above offset current generating section 75 is mounted at the preceding stage of the high-speed current comparing section 71, it may be mounted at a subsequent stage thereof. In this case, the same effects can similarly be obtained.

(b-5) Fifth Modification

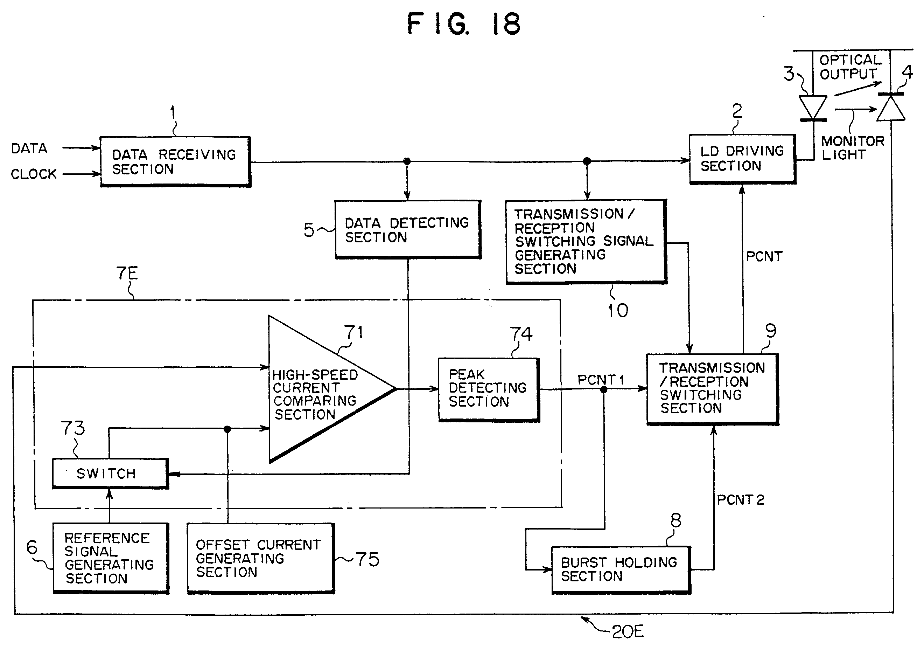

Fig. 18 is a block diagram showing a fifth modification (light emitting element control unit 20E) of the light emitting element control unit according to the first embodiment of the present invention. As shown in Fig. 18, in the light emitting element control unit 20E, an optical power control section 7E includes a high-speed current comparing section 71, a switch 73, and a peak detecting section 74. Further, an offset current generating section 75 is added to the optical power control section 7E.

That is, the optical power control section 7E in the fifth modification does not include an AMP 70 unlike the above optical power control section 7D (the fourth modification). Hence, the light emitting element control unit 20E can be applied in the case of, for example, a low bit rate of a data signal. Other operations are identical with those in the above light emitting element control unit 20D.

Thus, according to the above light emitting element control unit 20E, it is possible to obtain the same effects as those in the first embodiment. In the optical power control section 7E, when no data signal is inputted, an offset current from the offset current generating section 75 is fed to a reference current signal. Hence, it is possible to cause a large difference between the monitor signal and the reference current signal to stop output of the optical output control signal. Consequently, it is possible to avoid a malfunction of an optical output control by the present unit 20E, and similarly contribute to enhanced performance of the present unit 20E.

(b-6) Sixth Modification

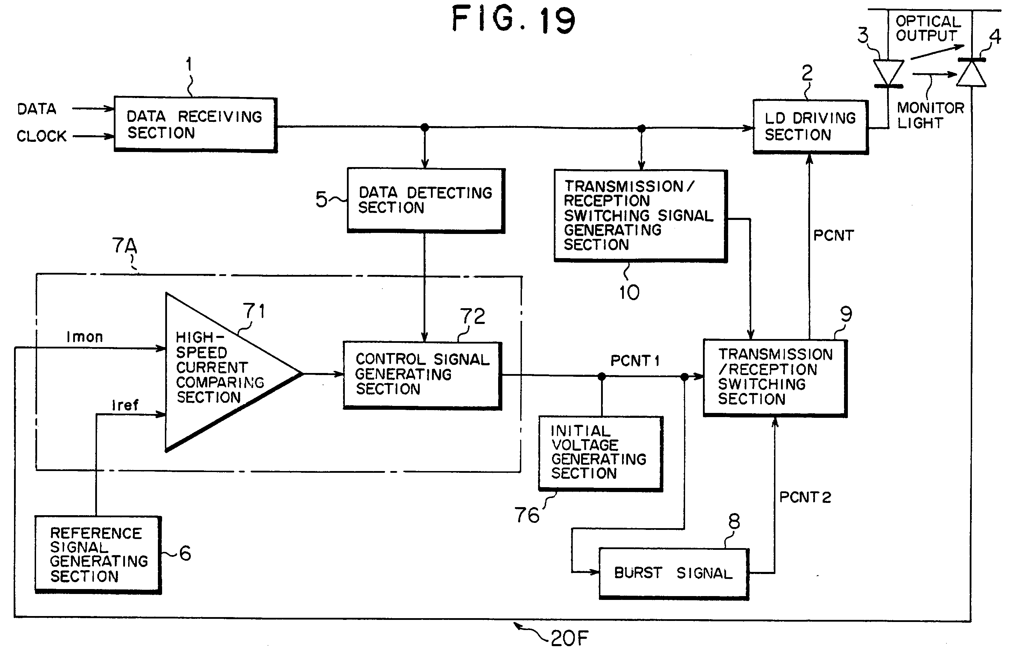

Fig. 19 is a block diagram showing a sixth modification (light emitting element control unit 20F) of the light emitting element control unit according to the first embodiment of the present invention. As shown in Fig. 19, the light emitting element control unit 20F includes an initial value voltage generating section (initial value generating section) 76 on the output side of an optical power control section 7A. That is, the light emitting element control unit 20F is obtained by adding the initial value voltage generating section 76 to the above light emitting element control unit 20A [the first modification; see Fig. 13].

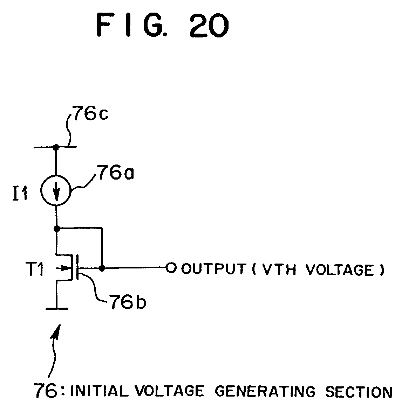

Here, the initial value voltage generating section 76 feeds (adds) an initial value voltage to an optical output control signal (PCNT1) outputted from the optical power control section 7A, and includes a constant current supply 76a, and an N-channel MOS transistor 76b as shown in, for example, Fig. 20.

Specifically, the constant current supply (I1) 76a is connected between a power source 76c and an output of the initial value voltage generating section 76. The N-channel MOS transistor (T1) 76b has a drain and a gate, both of which are connected to the output of the initial value voltage generating section 76, and a source connected to the ground. It is thereby possible to feed a VTH voltage (initial value voltage) to the output from the optical power control section 7A.

That is, the above initial value voltage generating section 76 gives the initial value (high voltage value from the ground) to the output (PCNT1) from the optical power control section 7A. It is thereby possible to provide a more rapid initial rise of an optical output control signal to an LD driving section 2.

Therefore, according to the above light emitting element control unit 20F, it is possible to obtain the same effects as those in the first embodiment. In addition, since the initial value is fed to the optical output control signal, it is possible to provide the more rapid initial rise of the optical output control signal, and enhance a processing speed of the present unit 20F.

Moreover, though the above initial value voltage generating section 76 is mounted at a subsequent stage of the control signal generating section 72, it may be mounted at the preceding stage thereof. In this case, the same effects can similarly be obtained.

(b-7) Seventh Modification

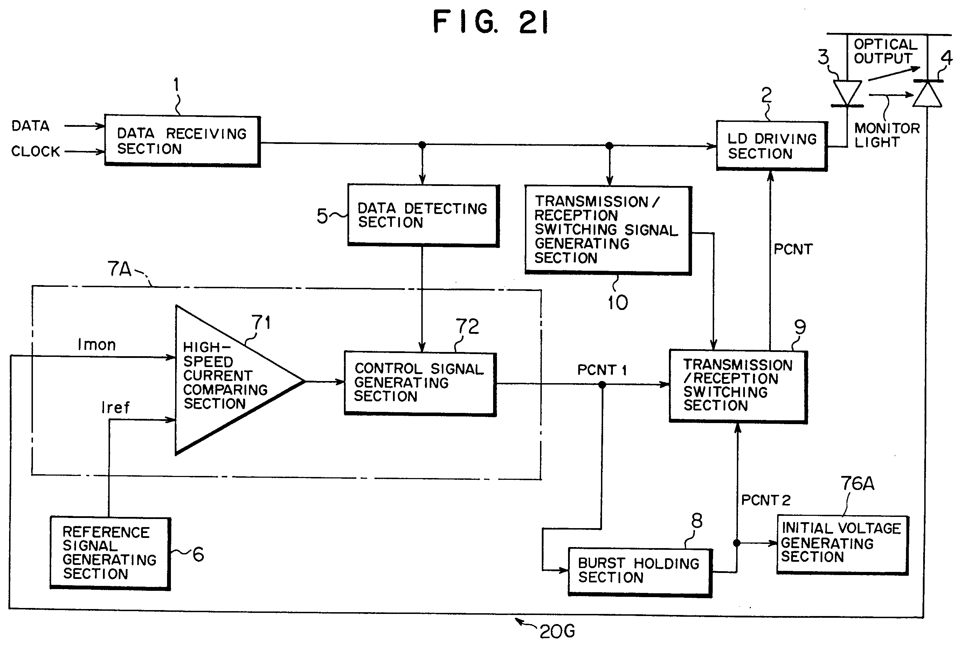

Fig. 21 is a block diagram showing a seventh modification (light emitting element control unit 20G) of the light emitting element control unit according to the first embodiment of the present invention. As shown in Fig. 21, a light emitting element control unit 20G includes an initial value voltage generating section 76A for feeding an initial value voltage to the output side of a burst holding section 8.

That is, the initial value voltage generating section 76A feeds the initial value voltage to an optical output control signal (PCNT2) which has been held in the burst holding section 8. In such a manner, by feeding the initial value (high voltage value from the ground) to the output from the burst holding section 8, it is possible to provide a rapid initial rise of the optical output control signal from the burst holding section 8 to an LD driving section 2.

Thus, according to the above light emitting element control unit 20G, it is possible to obtain the same effects as those in the first embodiment. In addition, since the initial value is fed to the optical output control signal (PCNT2) held in the burst holding section 8, it is possible to provide the rapid initial rise of the optical output control signal from the burst holding section 8 to the LD driving section 2, and enhance a processing speed of the present unit 20G as in the above case.

(b-8) Eighth Modification

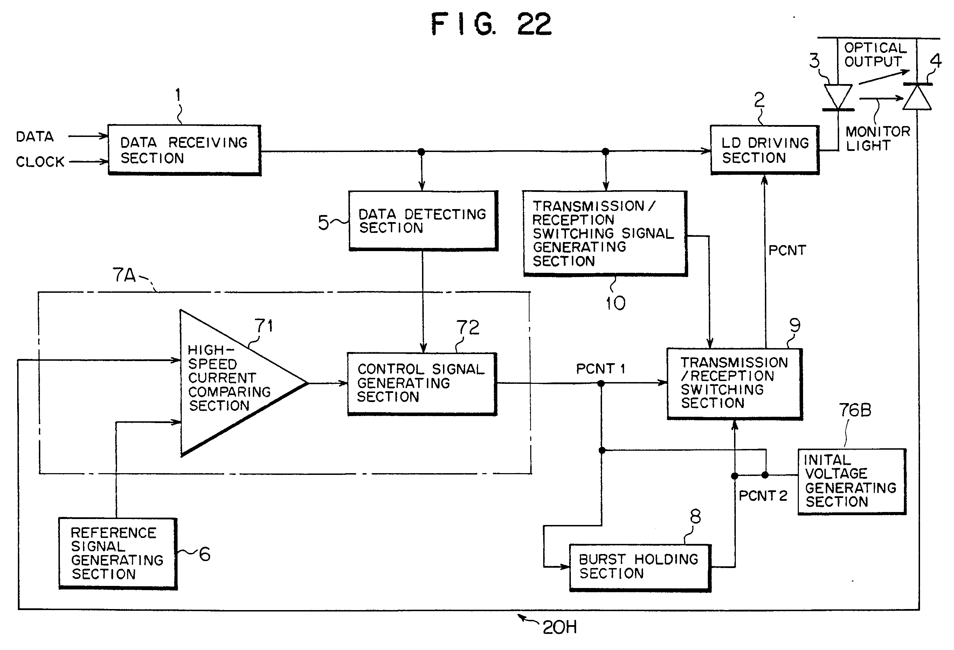

Fig. 22 is a block diagram showing an eighth modification (light emitting element control unit 20H) of the light emitting element control unit according to the first embodiment of the present invention. As shown in Fig. 22, a light emitting element control unit 20H includes an initial value voltage generating section 76B for feeding an initial value voltage to the input side and the output side of a burst holding section 8.

That is, the initial value voltage generating section 76B feeds the initial value voltage to output (PCNT1) from the optical power control section 7 and output (PCNT2) which has been held in the burst holding section 8. In such a manner, by feeding the initial value (high voltage value from the ground) to both the outputs, it is possible to provide a more rapid initial rise of the optical output control signal irrespective of a burst transmission or non-transmission time, and similarly enhance a processing speed of the present unit 20H.

Moreover, though the above initial value voltage generating section 76B feeds the initial value voltage to both the output from the control signal generating section 72 of the optical power control section 7 and the output from the burst holding section 8, it is to be noted that the initial value voltage may be fed to both output from a high-speed current comparing section 71 at the preceding stage of the control signal generating section 72 and the output from the burst holding section 8. In this case, the same effects can similarly be obtained.

(c) Description of Second Embodiment

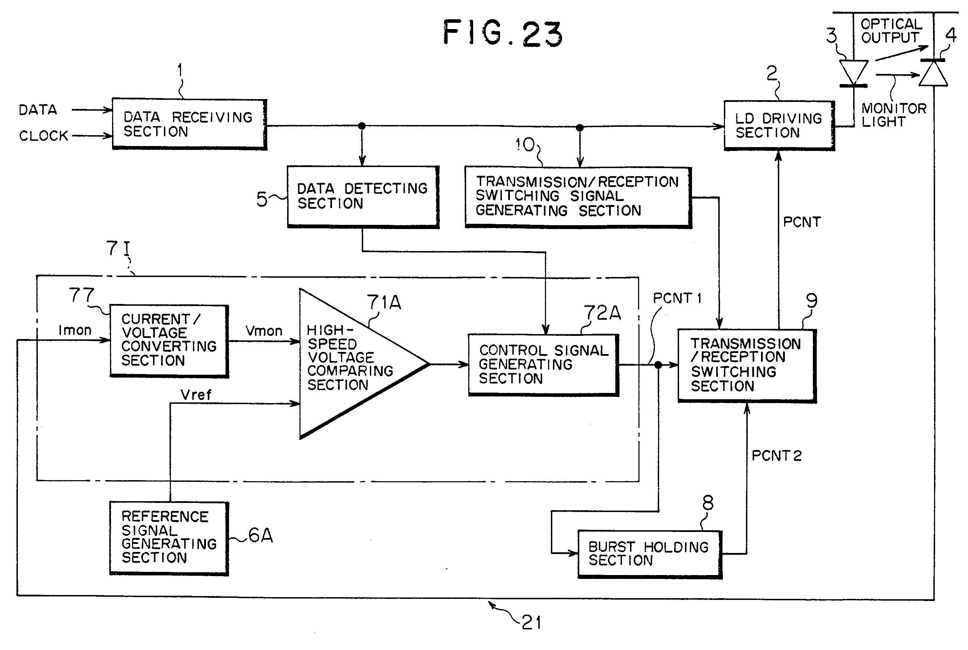

Fig. 23 is a diagram showing a configuration of the light emitting element control unit according to the second embodiment of the present invention. As shown in Fig. 23, a light emitting element control unit 21 includes a data receiving section 1, an LD driving section 2, a light emitting element 3, a light receiving element 4, a data detecting section 5, a reference signal generating section 6A, an optical power control section 7I, a burst holding section 8, a transmission/reception switching section 9, and a transmission/reception switching signal generating section 10. Moreover, the same reference numerals in Fig. 23 as those in the above discussion are used for the same or substantially the same, and descriptions thereof are omitted.

Here, the reference signal generating section 6A generates a reference voltage signal. Further, the optical power control section 7I compares a monitor signal detected from optical output from the light emitting element 3 with the reference voltage signal generated in the reference signal generating section 6, and outputs an optical output control signal (light emitting element driving and controlling signal) for a control of the LD driving section 2 depending upon the result of comparison and output from the data detecting section 5. For example, the optical power control section includes a current/voltage converting section 77, a high-speed voltage comparing section 71A, and a control signal generating section 72A.

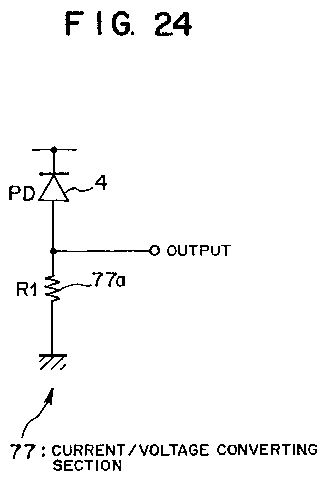

Here, the current/voltage converting section 77 converts into a voltage the monitor signal detected from the optical output from the light emitting element 3. The light receiving element 4 converts the optical signal into a current signal as the monitor signal, and the monitor signal is additionally converted therein into the voltage signal. In the current/voltage converting section 77, a resistor (R1) 77a is connected between an anode of the light receiving element 4 and the ground as shown in, for example, Fig. 24.

That is, in the current/voltage converting section 77, the resistor 77a can convert into the voltage signal the current signal equivalent to the optical output received by the light receiving element 4.

Also, the high-speed voltage comparing section (voltage comparing section) 71A compares output (Vmon) from the current/voltage converting section 77 with the reference voltage signal (Vref) generated in the reference signal generating section 6A.

In addition, the control signal generating section (light emitting element driving and controlling signal generating section) 72A receives output from the high-speed voltage comparing section 71A to generate an optical output control signal for a control of the LD driving section 2 depending upon the output from the data detecting section 5, and functions as in the control signal generating section 72 (see Fig. 6) in the above first embodiment. However, the control signal generating section 72A generates the optical output control signal by using not the current but the voltage.

That is, though the reference signal and the monitor signal are compared by using the current signal to generate the optical output control signal in the above first embodiment, in the light emitting element control unit 21 according to the second embodiment, the reference signal and the monitor signal are compared by using the voltage signal to generate the optical output control signal. That is, even by using the voltage signal, it is possible to provide the same function as in the case using the current signal.

As set forth above, in the light emitting element control unit 21 having the above configuration according to the second embodiment of the present invention, as shown in Fig. 23, in response to input of the first burst data signal, the current/voltage converting section 77 converts the monitor signal from the light receiving element 4 into the voltage signal, and the high-speed voltage comparing section 71A thereafter compares the monitor voltage signal with the reference voltage signal from the reference signal generating section 6A.

Thereafter, the control signal generating section 72A receives the above result of comparison, and transmits the optical output control signal (PCNT1) to the transmission/reception switching section 9 and the burst holding section 8 depending upon the output from the data detecting section 5.

In this state, that is, for the burst transmission period of the data signal, output (PCNT1) from the control signal generating section 72A is fed as an optical output control signal (PCNT) to the LD driving section 2 depending upon a switching control signal from the transmission/reception switching signal generating section 10.

On the other hand, for the burst non-transmission period of the data signal, a signal (PCNT2) held in the burst holding section 8 is fed as the optical output control signal (PCNT) to the LD driving section 2 depending upon the switching control signal from the transmission/reception switching signal generating section 10 as in the above case.

Thereby, when an additional data signal is inputted, to the LD driving section 2 has been fed the optical output control signal at the same level as that in the precedent burst transmission period so that the light emitting element 3 can instantaneously output a stable optical signal.

As stated above, according to the light emitting element control unit 21 in the second embodiment of the present invention, even when the voltage signal is used, as in the above first embodiment, the burst holding section 8 holds the optical output control signal generated in the optical power control section 7I, and any one of the optical output control signal from the optical power control section 7I and the signal held in the burst holding section 8 is selected according to the switching of transmission/reception of the data signal. Therefore, it is possible to instantaneously raise the optical output from the light emitting element 3 without excessive emission, and hold the optical output control signal irrespective of the length of burst period. As a result, it is possible to obtain stable and accurate optical output without a variation in power even at the next burst transmission time, and contribute to enhanced performance of the present unit.

(d) Description of Modifications of Second Embodiment

Meanwhile, the above light emitting element control unit 21 may be configured as a plurality of modifications as shown infra (the first modification to the fifth modification). Moreover, the same reference numerals as those in the above discussion are used for the same or substantially the same functions in the drawings showing the following modifications, and descriptions thereof are omitted.

(d-1) First Modification

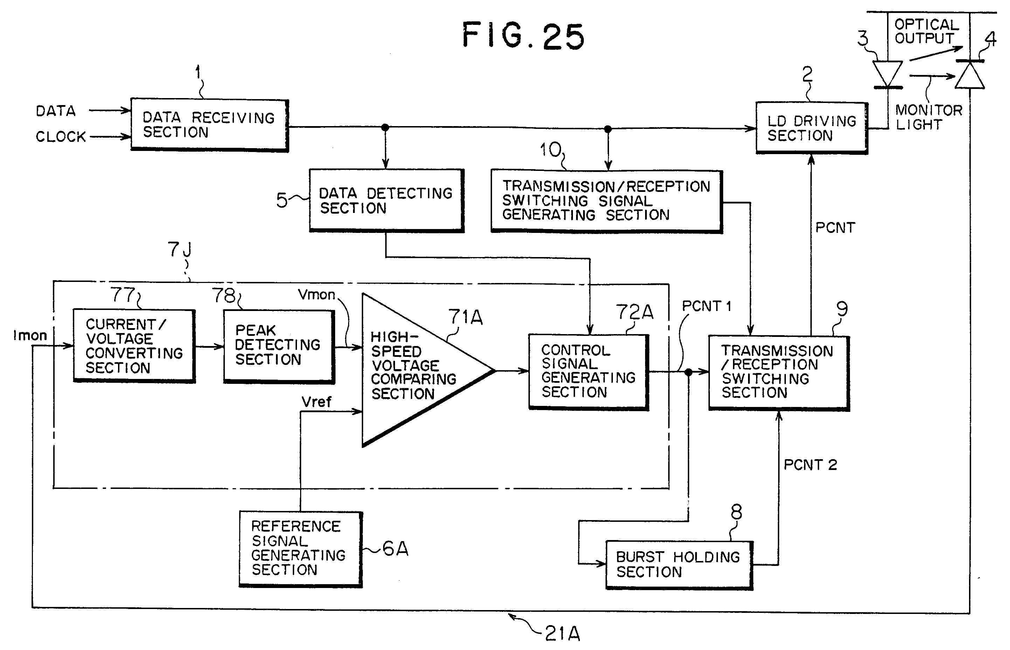

Fig. 25 is a block diagram showing a configuration of a first modification (light emitting element control unit 21A) of the light emitting element control unit according to the second embodiment of the present invention. An optical power control section 7J shown in Fig. 25 functions substantially as in the optical power control section 7I (the second embodiment) described above referring to Fig. 23, and includes a current/voltage converting section 77, a peak detecting section 78, a high-speed voltage comparing section 71A, and a control signal generating section 72A. That is, unlike the above optical power control section 7I, the peak detecting section 78 is mounted.

Here, the peak detecting section 78 detects a peak value of a voltage signal outputted from the current/voltage converting section 77. By detecting the peak value, it is possible to provide a constant level of a monitor voltage signal converted in the current/voltage converting section 77. That is, since the high-speed voltage comparing section 71A can compare a reference voltage signal having a constant level with the above monitor voltage signal having the constant level, the high-speed voltage comparing section 71A can output a stable result of comparison.

Further, with the peak detecting section 78, it is also possible to make the monitor signal from a light receiving element 4 and the reference voltage signal from a reference signal generating section 6A in phase. It is thereby possible to avoid a malfunction of an optical output control by the present unit 21A when no data signal is inputted.

Moreover, the peak detecting section 78 is configured substantially as in the above optical power control section 74 described above referring to Fig. 17. Here, since a small time constant is set in a capacitor (the capacitor 74c in Fig. 17) mounted in the circuit, it is possible to instantaneously output a peak value to the high-speed voltage comparing section 71A.

According to such a configuration, in the light emitting element control unit 21A according to the first modification of the second embodiment of the present invention, in response to input of the first burst data signal, the current/voltage converting section 77 converts the monitor signal from the light receiving element 4 into the voltage signal, and the high-speed voltage comparing section 71A thereafter compares the reference voltage signal from the reference signal generating section 6A with the above peak value.

Thereafter, the control signal generating section 72A receives the above result of comparison, and transmits an optical output control signal (PCNT1) to a transmission/reception switching section 9 and a burst holding section 8 depending upon output from a data detecting section 5.

Subsequently, the same operation is performed as in the above second embodiment. That is, for a burst transmission period of the data signal, the output (PCNT1) from the control signal generating section 72A is fed to the LD driving section 2 as the optical output control signal (PCNT). For a burst non-transmission period, a signal (PCNT2) held in the burst holding section 8 is fed to the LD driving section 2 as the optical output control signal (PCNT).

As set forth above, according to the above light emitting element control unit 21A, the optical power control section 7J detects the peak value of the signal obtained by converting the monitor signal into the voltage signal before the comparison in the high-speed voltage comparing section 71A. The high-speed voltage comparing section 71A can output the stable result of comparison so that the stable optical output control signal can be fed to the LD driving section 2.

Further, it is also possible to make the monitor signal from the light receiving element 4 and the reference voltage signal from the reference signal generating section 6A in phase. It is thereby possible to avoid the malfunction of the optical output control by the present unit 21A when no data signal is inputted.

(d-2) Second Modification

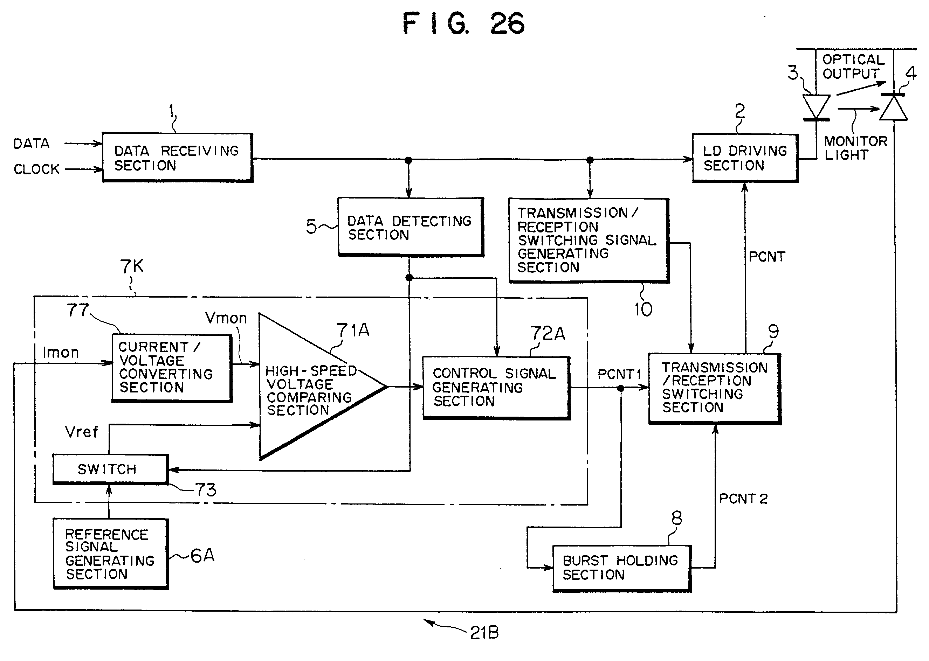

Fig. 26 is a block diagram showing a configuration of a second modification (light emitting element control unit 21B) of the light emitting element control unit according to the second embodiment of the present invention. An optical power control section 7K shown in Fig. 26 functions substantially as in the optical power control section 7I (the second embodiment) described above referring to Fig. 23, and includes a current/voltage converting section 77, a high-speed voltage comparing section 71A, a control signal generating section 72A, and a switch 73. That is, unlike the above optical power control section 7I, the switch 73 is mounted.

That is, the switch 73 stops a reference current signal from a reference signal generating section 6A when a data signal is "0" (at a burst non-transmission time). In the above optical power control section 7K, the switch 73 is mounted on the output side of the reference signal generating section 6A. Depending upon output (SH; sampling signal) from the data detecting section 5, the reference signal generating section 6A can output the reference voltage signal only for a predetermined time interval when the data signal is "1". Thus, it is possible to reduce power consumption of the optical power control section 7K.

According to such a configuration, in the light emitting element control unit 21B according to the second modification of the second embodiment of the present invention, in response to input of the first burst data signal, the data detecting section 5 generates a sampling signal depending upon the data signal. The switch 73 receives the signal, and is set by an ON control to output the reference voltage signal from the reference signal generating section 6A to the high-speed voltage comparing section 71A.

Thereafter, the high-speed voltage comparing section 71A compares the above reference voltage signal with the monitor signal from the light receiving element 4, obtained by the conversion of the current/voltage converting section 77 into the voltage signal. The control signal generating section 72A receives the above result of comparison, and transmits an optical output control signal (PCNT1) to a transmission/reception switching section 9 and a burst holding section 8 depending upon the sampling signal from the above data detecting section 5.

In this state, that is, for the burst transmission period of the data signal, the output (PCNT1) from the control signal generating section 72A is fed as an optical output control signal (PCNT) to an LD driving section 2 depending upon a switching control signal from a transmission/reception switching signal generating section 10.

On the other hand, for the burst non-transmission period of the data signal, a signal (PCNT2) held in the burst holding section 8 is fed as the optical output control signal (PCNT) to the LD driving section 2 depending upon the switching control signal from the transmission/reception switching signal generating section 10 as in the above case. Moreover, at this point in time, since the data detecting section 5 outputs no sampling signal, an OFF control of the switch 73 is performed so that the reference signal generating section 6A outputs no reference voltage signal.

Therefore, as in the above case, when an additional data signal is inputted, to the LD driving section 2 has been fed the optical output control signal at the same level as that in the precedent burst transmission period so that the light emitting element 3 can instantaneously output a stable optical signal.

As stated above, according to the above light emitting element control unit 21B, the optical power control section 7K can output the reference voltage signal only for the predetermined time interval when the data signal is "1". Thus, it is possible to reduce the power consumption of the optical power control section 7K, resulting in an advantage in that power consumption of the whole unit can be reduced.

(d-3) Third Modification

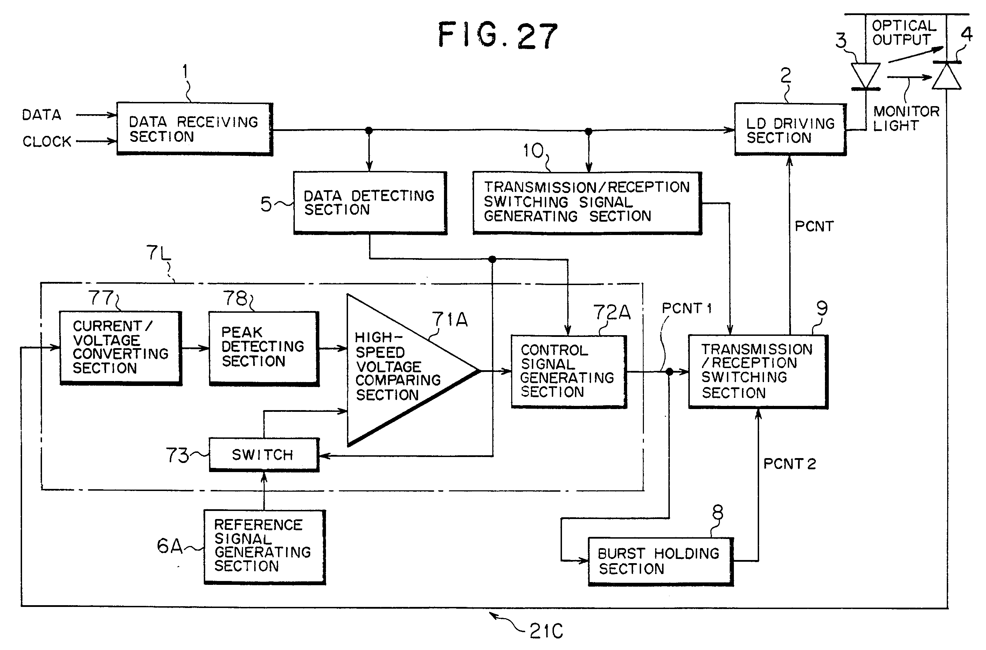

Fig. 27 is a block diagram showing a configuration of a third modification (light emitting element control unit 21C) of the light emitting element control unit according to the second embodiment of the present invention. An optical power control section 7L shown in Fig. 27 functions substantially as in the optical power control section 7J (the first embodiment) described above referring to Fig. 25, and includes a current/voltage converting section 77, a peak detecting section 78, a high-speed voltage comparing section 71A, a control signal generating section 72A, and a switch 73. That is, unlike the above optical power control section 7J, the switch 73 is mounted.

That is, in the optical power control section 7L in the third modification, as in the above case, since the switch 73 is mounted on the output side of a reference signal generating section 6A, it is possible to reduce power consumption of the optical power control section 7L.

A description will now be given of the operation of the light emitting element control unit 21C according to the third modification of the second embodiment of the present invention. First, in response to input of the first burst data signal, a data detecting section 5 generates a sampling signal depending upon the data signal. The switch 73 receives the signal, and is set by an ON control to output a reference current signal from the reference signal generating section 6A to the high-speed voltage comparing section 71A.

At this point in time, a monitor signal from a light receiving element 4 is converted in the current/voltage converting section 77 into a voltage signal, and a peak value of the voltage signal is thereafter detected. The high-speed voltage comparing section 71A compares the above reference voltage signal with the peak value.

Then, the control signal generating section 72A receives the above result of comparison, and transmits an optical output control signal (PCNT1) to a transmission/reception switching section 9 and a burst holding section 8 depending upon the sampling signal from the above data detecting section 5.

Subsequently, the same operation is performed as in the above second embodiment. That is, for the burst transmission period of the data signal, the output (PCNT1) from the control signal generating section 72A is fed to the LD driving section 2 as the optical output control signal (PCNT). For the burst non-transmission period, a signal (PCNT2) held in the burst holding section 8 is fed to the LD driving section 2 as the optical output control signal (PCNT).

As stated above, according to the above light emitting element control unit 21C, the optical power control section 7L can output the reference voltage signal only for the predetermined time interval when the data signal is "1". Thus, it is possible to reduce the power consumption of the optical power control section 7L. In addition, the optical power control section 7L detects the peak value of the signal obtained by converting the monitor signal into the voltage signal before the comparison in the high-speed voltage comparing section 71A. The high-speed voltage comparing section 71A can output the stable result of comparison so that the stable optical output control signal can be fed to the LD driving section 2.

(d-4) Fourth Modification

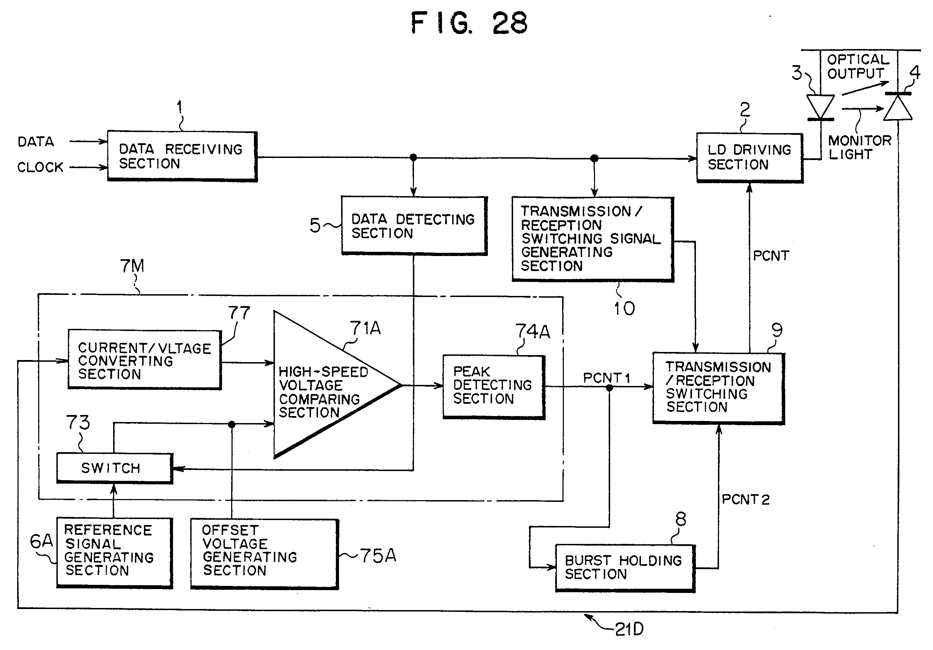

Fig. 28 is a block diagram showing a configuration of a fourth modification (light emitting element control unit 21D) of the light emitting element control unit according to the second embodiment of the present invention. As shown in Fig. 28, in the light emitting element control unit 21D, an optical power control section 7M includes a current/voltage converting section 77, a high-speed voltage comparing section 71A, a switch 73, and a peak detecting section 74A. Further, an offset voltage generating section 75A is added to the peak detecting section 7M to generate an offset voltage fed to a reference voltage signal from a reference signal generating section 6A.

Specifically, the above offset voltage generating section 75A feeds the offset voltage to the reference voltage signal for a period in which the data signal is "0" (for a burst non-transmission period) .

That is, since the offset voltage is fed to the reference voltage signal when no data signal is inputted, the high-speed voltage comparing section 71A can cause a large difference between the monitor voltage signal and the reference voltage signal. This prevents the peak detecting section 74A from erroneously outputting an optical output control signal so that it is possible to avoid a malfunction of an optical output control by the present unit 21D.

Further, the peak detecting section 74A detects a peak value of output from the high-speed voltage comparing section 71A, and functions as a light emitting element driving and controlling signal generating section. That is, the peak detecting section 74A outputs the above detected peak value as the optical output control signal for a control of an LD driving section 2.

According to such a configuration, in the light emitting element control unit 21D according to the fourth modification of the second embodiment of the present invention, in response to input of the first burst data signal, the data detecting section 5 generates a sampling signal depending upon the data signal. The switch 73 receives the signal, and is set by an ON control to output a reference voltage signal from the reference signal generating section 6A to the high-speed voltage comparing section 71A.

Thereafter, the high-speed voltage comparing section 71A compares the above reference voltage signal with the monitor signal from the light receiving element 4, obtained by the conversion of the current/voltage converting section 77 into the voltage signal. The peak detecting section 74A detects the peak value of the above result of comparison, and transmits the peak value as an optical output control signal (PCNT1) to a transmission/reception switching section 9 and a burst holding section 8.

In this state, that is, for the burst transmission period of the data signal, the output (PCNT1) from the peak detecting section 74A is fed as an optical output control signal (PCNT) to the LD driving section 2 depending upon a switching control signal from a transmission/reception switching signal generating section 10.

On the other hand, for the burst non-transmission period of the data signal, a signal (PCNT2) held in the burst holding section 8 is fed as the optical output control signal (PCNT) to the LD driving section 2 depending upon the switching control signal from the transmission/reception switching signal generating section 10 as in the above case.

Further, at this point in time, since the data detecting section 5 outputs no sampling signal, an OFF control of the switch 73 is performed so that the reference signal generating section 6A outputs no reference voltage signal to the high-speed voltage comparing section 71A. Subsequently, since the offset voltage from the offset voltage generating section 75A is fed to the high-speed voltage comparing section 71A, the high-speed voltage comparing section 71A outputs no differential voltage between the monitor voltage signal and the reference voltage signal. As a result, the peak detecting section 74A outputs no optical output control signal (PCNT1).

Therefore, as in the above case, when an additional data signal is inputted, to the LD driving section 2 has been fed the optical output control signal at the same level as that in the precedent burst transmission period so that the light emitting element 3 can instantaneously output a stable optical signal.

As stated above, according to the above light emitting element control unit 21D, in the optical power control section 7M, since the offset voltage generating section 75A feeds the offset voltage to the reference voltage signal when no data signal is inputted, the high-speed voltage comparing section 71A can cause the large difference between the monitor voltage signal and the reference voltage signal so as to stop output of the optical output control signal. Thus, it is possible to avoid the malfunction of the optical output control by the present unit 21D for the burst non-transmission period, and contribute to enhanced performance of the present unit 21D as in the above case.

(d-5) Fifth Modification

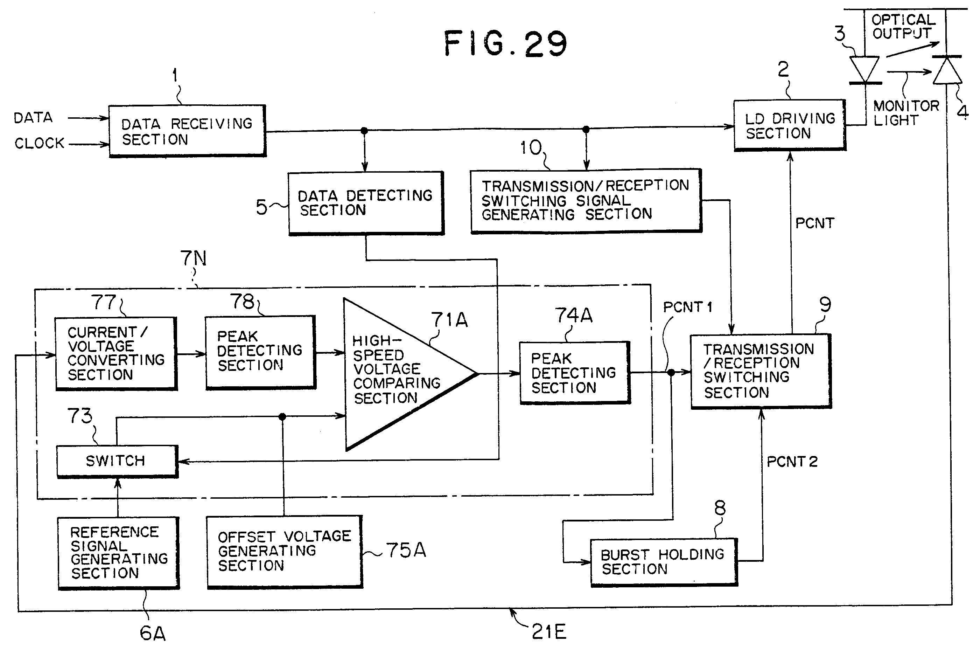

Fig. 29 is a block diagram showing a configuration of a fifth modification (light emitting element control unit 21E) of the light emitting element control unit according to the second embodiment of the present invention. As shown in Fig. 29, in the light emitting element control unit 21E, an optical power control section 7N includes a current/voltage converting section 77, a peak detecting section 78, a high-speed voltage comparing section 71A, a switch 73, and a peak detecting section 74A. Further, an offset voltage generating section 75A is added to the optical power control section 7N.

That is, the optical power control section 7N in the fifth modification is obtained by adding the peak detecting section 78 to the above optical power control section 7M (the fourth modification; see Fig. 28). Hence, in the light emitting element control unit 21E, after a peak value of a monitor voltage signal is detected, and the high-speed voltage comparing section 71A compares it with a reference voltage signal. Thus, the high-speed voltage comparing section 71A can output a stable result of comparison.

Therefore, according to the above light emitting element control unit 21E, when no data signal is inputted, the optical power control section 7N can cause a large difference between the monitor voltage signal and the reference voltage signal to stop the optical output control signal. Consequently, it is possible to avoid a malfunction of an optical output control for the burst non-transmission period. In addition, the detection is made of the peak value of the signal obtained by converting the monitor signal into the voltage signal before the comparison in the high-speed voltage comparing section 71A. The high-speed voltage comparing section 71A can output the stable result of comparison so that the stable optical output control signal can be fed to the LD driving section 2.

Moreover, though the above offset voltage generating section 75A is mounted at the preceding stage of the high-speed voltage comparing section 71A, it may be mounted at a subsequent stage thereof. In this case, the same effects can similarly be obtained.

(e) Others

Moreover, in the embodiments, the component parts in the optical power control section may optically be combined according to the purpose for which it is used, and a great contribution can be made to flexibility in system building. Further, it is possible to significantly enhance the performance of the present unit by a synergistic effect of characteristics of the component parts.

Further, in the above embodiments, the reference signals (reference current signal, and reference voltage signal) are stopped when data is "0" irrespective of the burst non-transmission period.

It must be noted that the present invention should not be limited to the above embodiments, and changes and variations may be made without departing from the spirit or scope of the inventive concept.

**Claims**

1. A light emitting element control unit (20) comprising:

   a light emitting element driving section (2) to drive according to an input data signal a light emitting element (3) for emitting an optical signal;
   a data detecting section (5) to detect a data signal for a predetermined time for a burst transmission period;
   a reference signal generating section (6) to generate a reference signal;
   an optical power control section (7) to compare a monitor signal detected from the optical output from the light emitting element (3) with the reference signal generated in the reference signal generating section (6) so as to output a light emitting element driving and controlling signal

for a control of the light emitting element driving section (2) depending upon the result of comparison and output from the data detecting section (5);
   a holding section (8) to hold output from the optical power control section (7); and
   a switching section (9) switched depending upon the data signal, thereby feeding any one of output from the optical power control section (7) and output from the holding section (8) to the light emitting element driving section (2).

2. A light emitting element control unit according to claim 1, wherein the reference signal generating section (6) generates a reference current signal as the reference signal, and

   the optical power control section (7) comprising:
   a monitor amplifying section (70) to amplify the monitor signal;
   a current comparing section (71) to compare the reference current signal from the reference signal generating section (6) with output from the monitor amplifying section (70); and
   a light emitting element driving and controlling signal generating section (72) to receive output from the current comparing section (71) so as to generate the light emitting element driving and controlling signal depending upon output from the data detecting section (5).

3. A light emitting element control unit according to claim 1, wherein the reference signal generating section (6) generates a reference current signal as the reference signal; and

   the optical power control section (7) comprising:
   a current comparing section (71) to compare the reference current signal from the reference signal generating section (6) with the monitor signal detected from optical output from the light emitting element (3); and
   a light emitting element driving and controlling signal generating section (72) to receive output from the current comparing section (71) so as to generate the light emitting element driving and controlling signal depending upon output from the data detecting section (5).

4. A light emitting element control unit according to claim 2 or 3, wherein the optical power control section (7B, 7C) comprises a switch section (73) to stop the reference current signal from the reference signal generating section (6) at a burst non-transmission time.

5. A light emitting element control unit according to claim 2 or 3, wherein the light emitting element driving and controlling signal generating section (72) comprises:

a first switch section (72a) to stop output from the current comparing section at the burst non-transmission time;
a charging capacitor (72c) to hold output from the current comparing section (71) obtained through the first switch section (72a); and
a discharging resistor (72d) connected parallel to the charging capacitor (72c) with respect to the output from the current comparing section (71).

6. A light emitting element control unit according to claim 2 or 3, wherein the optical power control section (7D) additionally comprises an offset current generating section (75) to generate an offset current fed to the reference current signal; and

the light emitting element driving and controlling signal generating section (10) being configured as a peak detecting section (74) to detect a peak value of the output from the current comparing section (71).

7. A light emitting element control unit according to claim 1, wherein the data detecting section (5) comprises delay sections (50-1 to 50-n where n: even number equal to or more than 2) to delay the input data signal; and

a logic circuit (51) to perform a logic operation between the data signal and delayed output obtained by delaying the data signal in the delay sections (50-1 to 50-n).

8. A light emitting element control unit according to claim 1, wherein the holding section (8) comprises:

an input buffer (80) for a light emitting element driving and controlling signal from the optical power control section (7);
a second switch section (81) to stop output from the input buffer (80) at a burst non-transmission time; and
a charging capacitor (82) connected to a feed line of the light emitting element driving and controlling signal so as to hold the light emitting element driving and controlling signal.

9. A light emitting element control unit according to claim 1, further comprising a switching control section (10) to make a control such that the switching section (9) is switched over to output from the optical power control section (7) at a burst transmission time, while the switching section (9) is switched over to output from the holding section (8) at a burst non-transmission time.

10. A light emitting element control unit according to claim 1, further comprising an initial value generating section (76) to add an initial value to a light emitting element driving and controlling signal outputted from the optical power control section (7A).

11. A light emitting element control unit according to claim 10, wherein an initial value from the initial value generating section (76A) is fed to the output side of the holding section (8).

12. A light emitting element control unit according to claim 10, wherein an initial value from the initial value generating section (76B) is fed to both the input side and the output side of the holding section (8).

13. A light emitting element control unit according to claim 1, wherein the reference signal generating section (6A) generates the reference voltage signal as the reference signal, and

the optical power control section (7I) comprising:
a current/voltage converting section (77) to convert into a voltage a monitor signal detected from optical output from the light emitting element (3);
a voltage comparing section (71A) to compare output from the current/voltage converting section (77) with the reference voltage signal generated in the reference signal generating section (6A); and
a light emitting element driving and controlling signal generating section (72A) to receive output from the voltage comparing section (71A) so as to generate depending upon output from the data detecting section (5) a light emitting element driving and controlling signal for a control of the light emitting element driving section (2).

14. A light emitting element control unit according to claim 1, wherein the reference signal generating section (6A) generates the reference voltage signal as the reference signal, and

the optical power control section (7J) comprising:
a current/voltage converting section (77) to convert into a voltage a monitor signal detected from optical output from the light emitting element (3);
a peak detecting section (78) to detect a peak value of a voltage signal outputted from the current/voltage converting section (77);

a voltage comparing section (71A) to compare output from the peak detecting section (78) with the reference voltage signal generated in the reference signal generating section (6A); and

a light emitting element driving and controlling signal generating section (72A) to receive output from the voltage comparing section (71A) so as to generate depending upon output from the data detecting section (5) a light emitting element driving and controlling signal for a control of the light emitting element driving section (2).

**15.** A light emitting element control unit according to claim 13 or 14, wherein the optical power control section (7K, 7L) comprises a switch section (73) to stop the reference voltage signal from the reference signal generating section (6A) at a burst non-transmission time.

**16.** A light emitting element control unit according to claim 13 or 14, wherein the optical power control section (7M, 7N) additionally comprises an offset voltage generating section (75) to generate an offset voltage fed to the reference voltage signal; and

the light emitting element driving and controlling signal generating section (2) being configured as a peak detecting section (74A) to detect a peak value of output from the voltage comparing section (71A).

**17.** A light emitting element control unit according to claim 1, wherein the reference signal generating section (6) generates a reference current signal as the reference signal,

an offset current generating section (75) being mounted to generate an offset current fed to the reference current signal, and
the optical power control section (7D) comprising:
a monitor amplifying section (70) to amplify the monitor signal;
a switch section (73) to stop the reference current signal from the reference signal generating section (6) at a burst non-transmission time;
a current comparing section (71) to compare the reference current signal from the reference signal generating section (6) with output from the monitor amplifying section (70); and
a light emitting element driving and controlling signal generating section (74) to detect a peak value of output from the current comparing section (71) so as to output the peak value as a light emitting element driving and controlling signal for a control of the light emitting element driving section (2).

**18.** A light emitting element control unit according to claim 1, wherein the reference signal generating section (6) generates a reference current signal as the reference signal,

an offset current generating section (75) being mounted to generate an offset current fed to the reference current signal, and
the optical power control section (7E) comprising:
a switch section (73) to stop the reference current signal from the reference signal generating section (75) at a burst non-transmission time;
a current comparing section (71) to compare the reference current signal from the reference signal generating section (75) with a monitor signal detected from optical output from the light emitting element (3); and
a light emitting element driving and controlling signal generating section (74) to detect a peak value of output from the current comparing section (71) so as to output the peak value as a light emitting element driving and controlling signal for a control of the light emitting element driving section (2).

**19.** A light emitting element control unit according to claim 1, wherein the reference signal generating section (6A) generates a reference voltage signal as the reference signal,

an offset voltage generating section (75A) being mounted to generate an offset voltage fed to the reference voltage signal, and
the optical power control section (7M) comprising:
a current/voltage converting section (77) to convert into a voltage a monitor signal detected from optical output from the light emitting element (3);
a switch section (73) to stop, at a burst non-transmission time, the reference voltage signal from the reference signal generating section (6A), inputted into the voltage comparing section (71A);
a voltage comparing section (71A) to compare output from the current/voltage converting section (77) with the reference voltage signal; and
a light emitting element driving and controlling signal generating section (74A) to detect a peak value of output from the voltage comparing section (71A) so as to output the peak value as a light emitting element driving and controlling signal for a control of the light emitting element driving section (2).

20. A light emitting element control unit according to claim 1, wherein the reference signal generating section (6A) generates a reference voltage signal as the reference signal,

an offset voltage generating section (75A) being mounted to generate an offset voltage fed to the reference voltage signal, and the optical power control section (7N) comprising:

a current/voltage converting section (77) to convert into a voltage a monitor signal detected from optical output from the light emitting element (3);

a peak detecting section (78) to detect a peak value of a voltage signal outputted from the current/voltage converting section (77);

a switch section (73) to stop, at a burst non-transmission time, the reference voltage signal from the reference signal generating section (6A), inputted into the voltage comparing section (71A);

the voltage comparing section (71A) to compare output from the current/voltage converting section (77) with the reference voltage signal; and

a light emitting element driving and controlling signal generating section (74A) to detect a peak value of output from the voltage comparing section (71A) so as to output the peak value as a light emitting element driving and controlling signal for a control of the light emitting element driving section (2A).

# FIG. 1

EP 0 944 187 A2

# FIG. 2

EP 0 944 187 A2

# FIG.3

50-1    50-n    51

DATA    DATA 1    SH

AND

MAIN DATA

5 : DATA DETECTING SECTION

FIG. 4(a) MAIN DATA

FIG. 4(b) DATA 1

FIG. 4(c) SH

EP 0 944 187 A2

# FIG. 5

# FIG. 6

SH o—
("1" FOR DATA "1")

ampo o—

72a  T2
T1

72b

72c  C1  72d  R1

o PCNT1

72: CONTROL SIGNAL GENERATING
SECTION

# F I G. 7

8 : BURST HOLDING SECTION

# FIG. 8(a)

Vdd — 81

R — 81

—oPCNT2

C1 — 82

EQUIVALENT CIRCUIT AT CHARGING TIME

# FIG. 8(b)

Vdd — 81

I LEAK — oPCNT2

C1 — 82

EQUIVALENT CIRCUIT AT HOLD TIME

# FIG. 9

TRANSMISSION /
RECEPTION SWITCHING
SIGNAL ("I" AT
TRANSMISSION TIME) o

PCNT1 o

PCNT2 o

90

91

92

T1
T2
T3
T4

o PCNT

9 : TRANSMISSION/RECEPTION
SWITCHING SECTION

# FIG. 10(a)

10: TRANSMISSION / RECEPTION
SWITCHING SIGNAL
GENERATING SECTION

# FIG. 10(b)

# FIG. 10(c)

EP 0 944 187 A2

**FIG. 11(a)** DATA

**FIG. 11(b)** INVERTED DATA

**FIG. 11(c)** SW

A

TIME CONSTANT ACCORDING TO R1 AND C1

B

DETECT SUCCESSION OF ZEROS FOR CERTAIN TIME INTERVAL OR MORE

FIG. 12(a)  DATA

FIG. 12(b)  SH

FIG. 12(c)  ampo

FIG. 12(d)  PCNT1, PCNT2

FIG. 12(e)  PCNT

FIG. 12(f)  SW

FIG. 12(g)  Iref, Imon

FIG. 12(h)  OPTICAL OUTPUT

MAGNIFIED VIEW

DATA

SH

SAMPLING TIME

EP 0 944 187 A2

# FIG. 13

EP 0 944 187 A2

# FIG. 14

# FIG. 15

DATA ⟶ **DATA RECEIVING SECTION** (1)

CLOCK ⟶

**LD DRIVING SECTION** (2)

OPTICAL OUTPUT — 3, 4

MONITOR LIGHT

**DATA DETECTING SECTION** (5)

**TRANSMISSION / RECEPTION SWITCHING SIGNAL GENERATING SECTION** (10)

PCNT

7C

**HIGH-SPEED CURRENT COMPARING SECTION** (71)

**CONTROL SIGNAL GENERATING SECTION** (72)

PCNT1

**TRANSMISSION /RECEPTION SWITCHING SECTION** (9)

**SWITCH** (73)

**REFERENCE SIGNAL GENERATING SECTION** (6)

PCNT 2

**BURST HOLDING SECTION** (8)

20C

EP 0 944 187 A2

# FIG. 16

EP 0 944 187 A2

# F I G. 17

74: PEAK DETECTING SECTION

# FIG. 18

EP 0 944 187 A2

# FIG. 19

EP 0 944 187 A2

# FIG. 20

76: INITIAL VOLTAGE GENERATING SECTION

# FIG. 21

DATA
CLOCK

1 DATA RECEIVING SECTION

OPTICAL OUTPUT

MONITOR LIGHT

4

3

2 LD DRIVING SECTION

5 DATA DETECTING SECTION

10 TRANSMISSION / RECEPTION SWITCHING SIGNAL GENERATING SECTION

PCNT

9 TRANSMISSION / RECEPTION SWITCHING SECTION

72 CONTROL SIGNAL GENERATING SECTION

PCNT 1

8 BURST HOLDING SECTION

PCNT 2

76A INITIAL VOLTAGE GENERATING SECTION

7A

71 HIGH-SPEED CURRENT COMPARING SECTION

Imon

Iref

6 REFERENCE SIGNAL GENERATING SECTION

20G

# F I G. 22

EP 0 944 187 A2

# FIG.23

# F I G. 24

PD 4

R1 77a

O OUTPUT

77 : CURRENT/VOLTAGE CONVERTING SECTION

# FIG.25

EP 0 944 187 A2

F I G. 26

# FIG.27

EP 0 944 187 A2

# FIG. 28

EP 0 944 187 A2

# FIG.29

DATA → | DATA RECEIVING SECTION |  1

CLOCK →

| DATA DETECTING SECTION |  5

| TRANSMISSION/RECEPTION SWITCHING SIGNAL GENERATING SECTION |  10

| LD DRIVING SECTION |  2

OPTICAL OUTPUT  3

MONITOR LIGHT  4

PCNT

7N

| CURRENT/ VOLTAGE CONVERTING SECTION |  77

| PEAK DETECTING SECTION |  78

| HIGH-SPEED VOLTAGE COMPARING SECTION |  71A

| PEAK DETECTING SECTION |  74A

PCNT 1

| TRANSMISSION /RECEPTION SWITCHING SECTION |  9

| SWITCH |  73

| REFERENCE SIGNAL GENERATING SECTION |  6A

| OFFSET VOLTAGE GENERATING SECTION |  75A

PCNT 2

| BURST HOLDING SECTION |  8

21E

EP 0 944 187 A2

54

# FIG.30

## RELATED ART

EP 0 944 187 A2

# FIG.31
## RELATED ART

FIG.31 RELATED ART — block diagram of optical transmitter 100 with main signal section 100D, APC circuit 100B, LD driving section 100A, LD 103, PD 104, and monitor light 100C.

Components: DATA RECEIVING SECTION (101), LD DRIVING SECTION (100A), REFERENCE VOLTAGE GENERATING SECTION (105), REFERENCE VOLTAGE PEAK DETECTING SECTION (107), MONITOR VOLTAGE GENERATING SECTION (106), MONITOR VOLTAGE PEAK DETECTING SECTION (108), DIFFERENTIAL VOLTAGE GENERATING SECTION (109), CONTROL SIGNAL GENERATING SECTION (110), ZERO SUCCESSION DETECTING SECTION (111).

EP 0 944 187 A2

# FIG.32

## RELATED ART

REFERENCE SIGNAL

ZERO SUCCESSION DETECTING SECTION  111

110

100A

103

REFERENCE VOLTAGE

DIFFERENTIAL VOLTAGE GENERATING SECTION  109

MONITOR VOLTAGE

110a  T3

110b  T1

102a

102b

102c

NON-INVERTED DATA

INVERTED DATA

110d

TRANSMISSION/RECEPTION SWITCHING SIGNAL  T2

PCNT

110f

110c

R2  110e

C1

102d

EP 0 944 187 A2

# FIG. 33(a)
RELATED ART

EQUIVALENT CIRCUIT AT CHARGING TIME

# FIG. 33(b)
RELATED ART

EQUIVALENT CIRCUIT AT HOLD TIME

**FIG.34(a)**
RELATED ART   DATA

**FIG.34(b)**
RELATED ART

TRANSMISSION /
RECEPTION
SWITCHING
SIGNAL

**FIG.34(c)**
RELATED ART

MONITOR ·
REFERENCE
SIGNAL

**FIG.34(d)**
RELATED ART

OUTPUT SIGNAL
OF DIFFERENTIAL
VOLTAGE
GENERATING
SECTION 109

**FIG.34(e)**
RELATED ART

OUTPUT SIGNAL OF
ZERO SUCCESSION
DETECTING
SECTION 111

TIME PERIOD
REQUIRED FOR
DETECTION OF
SUCCESSION OF
ZEROS OF SIGNAL

**FIG.34(f)**
RELATED ART   T1 CURRENT

CHARGING
CURRENT
FLOWING WHILE
SIGNAL BEING
ZERO

**FIG.34(g)**
RELATED ART

OPTICAL OUTPUT
CONTROL SIGNAL

SET POWER

INCREASE WHILE
SIGNAL BEING
ZERO

INCREASE WHILE
SIGNAL BEING
ZERO

EXCESSIVE
EMISSION

SET POWER

**FIG.34(h)**
RELATED ART   OPTICAL OUTPUT